(19) Europäisches Patentamt
European Patent Office
Office européen des brevets

(11) EP 2 590 988 B1

(12) EUROPÄISCHE PATENTSCHRIFT

(45) Veröffentlichungstag und Bekanntmachung des Hinweises auf die Patenterteilung:
**01.03.2017 Patentblatt 2017/09**

(21) Anmeldenummer: **11726383.0**

(22) Anmeldetag: **09.06.2011**

(51) Int Cl.:
***C07F 7/08*** *(2006.01)* ***C07F 7/18*** *(2006.01)*
***B41M 5/52*** *(2006.01)* ***C09C 1/30*** *(2006.01)*

(86) Internationale Anmeldenummer:
**PCT/EP2011/059607**

(87) Internationale Veröffentlichungsnummer:
**WO 2012/004082 (12.01.2012 Gazette 2012/02)**

(54) **QUARTÄRE-AMINOALKOHOLFUNKTIONELLE, SILICIUMORGANISCHE VERBINDUNGEN, DIESE ENTHALTENDE ZUSAMMENSETZUNG SOWIE DEREN HERSTELLUNG UND VERWENDUNG**

QUATERNARY AMINO ALCOHOL FUNCTIONAL ORGANOSILICON COMPOUNDS, COMPOSITION CONTAINING THE LATTER AND THEIR PRODUCTION AND USE

COMPOSÉS ORGANOSILICIQUES À FONCTION AMINO-ALCOOL QUATERNAIRE, COMPOSITION CONTENANT CES COMPOSÉS, LEUR PRÉPARATION ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.07.2010 DE 102010031178**

(43) Veröffentlichungstag der Anmeldung:
**15.05.2013 Patentblatt 2013/20**

(73) Patentinhaber: **Evonik Degussa GmbH**
**45128 Essen (DE)**

(72) Erfinder:
- **WASSMER, Christian**
  **79688 Hausen (DE)**
- **STANDKE, Burkhard**
  **79540 Lörrach (DE)**
- **SCHARFE, Stefan**
  **63526 Erlensee (DE)**
- **BATZ-SOHN, Christoph**
  **Morris Plains, NJ 07950 (US)**
- **HEUSCHEN, Andrea**
  **63639 Flörsbachtal (DE)**

(56) Entgegenhaltungen:
**GB-A- 2 403 406** **US-A- 4 005 028**
**US-A- 4 013 573** **US-A- 5 051 129**
**US-A1- 2003 175 451** **US-A1- 2009 028 912**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 590 988 B1

## Beschreibung

Die Erfindung betrifft neue quartäre-aminoalkoholfunktionelle, siliciumorganische Verbindungen, diese enthaltende wässrige Zusammensetzungen und Verfahren zu ihrer Herstellung, insbesondere in Form vom Oligomeren und Polymeren, die teilweise hydrolysiert bis vollständig hydrolysiert vorliegen können, und insbesondere wasserlöslich sind. Die Zusammensetzungen weisen einen nur äußerst geringen VOC-Anteil auf. Ferner wird deren Verwendung beschrieben, insbesondere - aber nicht ausschließlich - zur kationischen Modifizierung von anorganischen oder polaren organischen Oberflächen, beispielsweise Füllstoffen, Pigmenten, Glas-, Mineral- und keramischen Oberflächen, polaren Kunst- und Naturstoffen, wie beispielsweise Polyester, Polyamide, Wolle, Siede, Cellulose, Lignocellulose, Holz, Proteine, Zucker, Polysaccharide und dergleichen, die auch in partikulärer Form oder Faserform, im cm-, mm-, mikronisierten oder auch im Nanometer-Bereich vorliegen können, in Papierstreichmassen, zur Kationisierung von Inkjet-Beschichtungen, bevorzugt bei der Herstellung von Inkjet-Fotopapieren, zur Ausrüstung von Fasermaterialien und/oder Textilien, zur Verbesserung der Anfärbbarkeit von Substraten, beispielsweise bei Textilfasern, Garnen, Papier, Folien oder auch entsprechend beschichteter Substrate, zum Hemmen bzw. Unterbinden des Wachstums von Mikroorganismen oder einer elektrostatischen Aufladung, um nur einige besonders vorteilhafte Anwendungsmöglichkeiten anzuführen.

Generell sind organofunktionelle Alkoxysilane mit quartärer Stickstofffunktion, d. h. mit einer kationischen einen organofunktionalisierten Stickstoff enthaltenden Gruppe, seit längerem bekannt. Der quartäre Stickstoff verfügt unabhängig vom pH-Wert über eine kationische Funktionalität. Bislang war ihre Herstellung nur über aufwendige Verfahren möglich, beispielsweise unter erhöhtem Druck im Autoklaven. Ein weiterer Nachteil dieser Alkoxysilane ist die Freisetzung von Hydrolysealkoholen in die Umwelt bei Anwendung der bekannten wasserbasierten Applikationslösungen.

Die Herstellung von kationischen Organosilanen und deren teilweiser Einsatz in wässrigen Phasen wird in den folgenden Schriften berichtet. DE 881654 offenbart die Herstellung von quartären Silanen im Autoklaven unter wasserfreien Bedingungen.

Weitere Verfahren offenbaren die NL 6517163 zur Herstellung von quartären Methylarylsilanen, DE 1262272 offenbart die Herstellung entsprechender Silicone. Auch die DE 2221349, DE 2648240, US 5051129, US 4013573, US 4005028, US 4035411, US 4005118 und US 4005119 offenbaren quartäre Silane bzw. Verfahren zur deren Herstellung.

WO 2008/004243 offenbart wasserlösliche Silane mit quartärer Aminofunktion. Die Wasserlöslichkeit wird durch Veresterung mir Glycolen erreicht, welche bei der Hydrolyse, also dem "Auflösen" der Silane in Wasser, freigesetzt werden und so eine erhebliche Belastung der wässrigen Lösung mit zusätzlichen organischen Komponenten, die gemeinhin als organische Lösemittel angesehen werden, verursachen.

Die Verwendung von quartären aminofunktionellen Alkoxysilanen zur Hemmung des Wachstums von Mikroorganismen beschreiben die DE 2222997, DE 2229580 und die DE 2408192. Eine verbesserte Anfärbbarkeit von schwer zu färbenden Materialien, wie Teflon oder auch Leder, durch Verwendung entsprechender Silane offenbart GB 882067. Die Herstellung quartär funktionalisierter Organosilane erfolgt jeweils in aprotischen organischen Lösemitteln oder unter Feuchtigkeitsausschluss und unter erhöhtem Druck. Die nach diesen Verfahren hergestellten Silane oder deren wässrige Formulierungen enthalten große Mengen an Lösemittel. Dies führt in vielen Anwendungen zu erheblichen Nachteilen, wie einem niedrigen Flammpunkt, der ex-Schutz erfordert, oder eine Verursachung von Umweltschäden durch eine hohe VOC-Belastung hervorruft.

In WO 2008/076839 wird ein handelsübliches quartäres Silan eingesetzt (AEM 5772, Aegis Antimicrobial agent, Wirkstoff: 3-(Trimethoxysilyl)propyldimethyl-octadecyl ammonium chloride), welches 12 % Methanol enthält. US 4845256 offenbart ein Verfahren zur Herstellung quartärer Silane Erdalkalijodid-Katalysatoren für die Umsetzung von chloralkylfunktionellen Alkoxysilanen und tertiären Aminen. Das beschriebene Verfahren läuft zwar unter Normaldruck bei einer Temperatur von 100 °C ab, jedoch ist es in zweierlei Hinsicht nachteilig. Zum einen werden für die Umwelt problematische Erdalkalijodide in erheblichen Mengen eingesetzt und zum anderen enthalten die wässrigen Applikationslösungen erhebliche Mengen an VOC, wie Hydrolysemethanol und Glykole, die im dortigen Verfahren eingesetzt werden und in der Applikationslösung verbleiben. Das in Beispiel 1 beschriebene Produkt erzeugt in einer wässrigen Applikationslösung mehr als 50 % VOC (bezogen auf die eingesetzte Lösung des quartären Methoxysilans [3-(Trimethoxysilyl)propyl-decyldimethyl-ammonium chloride] gelöst in Propylenglykolmonomethylether).

Die folgenden Schriften offenbaren die Anwendung von kationischen aminofunktionellen Silanen zur Kationisierung von Inkjet-Papieranwendungen.

WO 2005/009745 A2 offenbart kationische Aluminiumoxidpartikel mit aminofunktionellen Silanen. US 20030175451 betrifft die Beschichtung von Silica mit Silanen zur Verbesserung der Performance bei Inkjet-Anwendungen. US 20050170109 offenbart die Behandlung von Silica mit Aminoalkoxysilanen und deren Anwendung für Inkjet-Papiere und DE 10 2007 012578 A1 die Herstellung von kationischen Silicadispersionen unter Verwendung von primären, sekundären oder tertiären Aminosilanen und deren Einsatz für Beschichtungen. WO 2005/009745 A2, US 2005/170109 A1 sowie US 2003/175451 erwähnen allgemein die Möglichkeit, ein quartäres aminofunktionelles Alkoxysilan, wie Trimethoxysilanpropyl-N,N,N-trimethylammoniumchlorid, bzw. ein N,N,N-Tributylammoniumchlorid substituiertes Silan einzusetzen. Konkrete Beispiele werden nicht offenbart.

In der DE 102007040802 A1 wird der erfolgreiche Einsatz von VOC-armen, protonierten aminofunktionellen silanolgruppenhaltigen Siloxansystemen (Hydrosile) bei der Kationisierung von Papierstreichmassen beschrieben. Die Protonierung der Aminofunktion dieser Systeme ist stark pH-Wert abhängig. Daher ist die Performance dieser Anwendungen noch verbesserungswürdig. Für die Verarbeitbarkeit von Papierstreichmassen ist deren Viskosität und Feststoffgehalt maßgeblich. Je höher die Viskosität, desto aufwändiger wird die Verarbeitung, wobei zugleich aus Kapazitätsgründen ein hoher Feststoffgehalt der Systeme angestrebt wird.

Aus DE 10 2009 002 477.8 bzw. PCT/EP2010/053626 ist die Umsetzung von Chlorpropyltriethoxysilan und Tetramethylethylendiamin zur Herstellung von Siloxansystemen zu entnehmen.

Es besteht daher weiterhin ein Bedarf an VOC-verminderten quartärenaminofunktionellen, siliciumorganischen Verbindungen, die die Einstellung einer niedrigen Viskosität bei gleichzeitig hohem Feststoffgehalt von Dispersionen, beispielsweise Silica-Dispersionen, insbesondere von Papierstreichmassen, ermöglichen. Vorzugsweise sollten deren Wasserlöslichkeit und VOC-Gehalt der siliciumorganischen Verbindungen gegenüber bekannten Systemen verbessert sowie Silica-Dispersionen mit niedrigem Grobabteil zugänglich sein.

Aufgabe der vorliegenden Erfindung war es, VOC-reduzierte quartäre-aminoalkoholfunktionelle, siliciumorganische Verbindungen bzw. diese enthaltende Zusammensetzungen und deren VOC-haltige Zwischenprodukte sowie ein wirtschaftliches Verfahren zu deren Herstellung bereitzustellen, das vorzugsweise eine wirtschaftliche Einstellung der gewünschten Viskosität und des Feststoffgehaltes im Verfahren erlaubt.

Die Aufgabe wird erfindungsgemäß entsprechend den Angaben in den Patentansprüchen gelöst. Insbesondere wird die Aufgabe durch die erfindungsgemäßen quartären-aminoalkoholfunktionellen, siliciumorganischen Verbindungen als auch durch die enthaltende Zusammensetzung entsprechend den Merkmalen der unabhängigen Ansprüche sowie durch die erfindungsgemäßen Herstellverfahren der unabhängigen Ansprüche gelöst. Bevorzugte Ausführungsformen sind in den Unteransprüchen sowie in der Beschreibung ausgeführt.

Überraschend konnte die Aufgabe gelöst werden, indem halogenalkylfunktionelle Alkoxysilane mit tertiären Aminoalkoholen in Gegenwart bzw. unter Zusatz einer definierten Menge Wasser oder zunächst wasserfrei und anschließend mit einer definierten Menge Wasser umgesetzt werden und der gebildete Hydrolysealkohol zumindest teilweise entfernt wird, bevorzugt wird der Hydrolysealkohol im Wesentlichen vollständig entfernt. Die stattfindende Quartärnisierungsreaktion und zumindest partielle Hydrolyse und gegebenenfalls partielle Kondensation wird vorteilhaft unter Temperaturkontrolle durchgeführt, d. h. es wird je nach Bedarf erwärmt oder gekühlt, auch wird die Reaktionsmischung geeigneterweise gerührt. Dabei wird aus einem ursprünglich tertiär substituierten Stickstoffatom des Aminoalkohols ein quartäres Stickstoffatom (bzw. quaternäres), insbesondere unter Bildung erfindungsgemäß erhältlicher oligomerer bzw. polymerer quartäraminofunktioneller, siliciumorganischer Verbindungen, die nachfolgend näher erläutert werden. Besonders überraschend und vorteilhaft ist, dass kein Katalysator für die Quartärnisierungsreaktion, für die Hydrolyse und/oder Kondensation eingesetzt werden braucht. Zudem war es überraschend und vorteilhaft hinsichtlich der Viskosität vorliegender Systeme, dass sich unter den Verfahrensbedingungen keine Ester der Silanol-Gruppen mit Aminoalkoholgruppen bilden.

Die Erfindung ermöglicht vorteilhaft die Bereitstellung neuer VOC-reduzierter (volatile organic compound) quartären-aminoalkoholfunktionellen, siliciumorganischen Verbindungen, die vorteilhaft bei Normaldruck und in hoher Ausbeute bereitgestellt werden können. Die erfindungsgemäßen siliciumorganischen Verbindungen können lineare, verzweigte und/oder cyclische Strukturen bzw. Strukturbereiche mit M-, D-, T-Strukturen aufweisen. Erfindungsgemäße quartären-aminoalkoholfunktionellen, siliciumorganischen Verbindungen sowie entsprechende wässrige Zusammensetzungen, die mindestens eine der erfindungsgemäßen quartären-aminoalkoholfunktionellen, siliciumorganischen Verbindungen enthalten, können vorteilhaft angewendet werden, besonders vorteilhaft bei der Bereitstellung von möglichst VOC-armen, niedrigviskosen Silica-Dispersionen für die Herstellung von Papierstreichmassen und insbesondere ausgehend solchen Dispersionen mit vergleichsweise niedrigem Grobanteil.

Darüber hinaus ist überraschend, dass bei der erfindungsgemäßen Umsetzung die besagten Reaktionen, wie Quartärnisierung, Hydrolyse und vorzugsweise Kondensation, praktisch gleichzeitig in einem Reaktionsgemisch bei relativ niedrigen Reaktionstemperaturen unterhalb von 100 °C und damit besonders vorteilhaft durchgeführt werden können. Ein weiterer besonderer Vorteil des erfindungsgemäßen Verfahrens ist es, dass die Umsetzung bei diesen relativ niedrigen Temperaturen bei Normaldruck ablaufen kann. Daher kann vorzugsweise auf die Verwendung von teuren und aufwendig zu bedienenden Autoklaven im erfindungsgemäßen Verfahren verzichtet werden, denn in Abhängigkeit von den eingesetzten tertiären Aminoalkoholen und deren Siedepunkt wird die Reaktion vorteilhaft bei Normaldruck durchgeführt, wenn der Siedepunkt der Amine oberhalb der Reaktionstemperatur liegt. Bevorzugt liegt der Siedepunkt der verwendeten tertiären Aminoalkohole, insbesondere solche der Formel III, wie nachstehend erläutert, oberhalb 85 °C, besonders bevorzugt über 100 °C, insbesondere über 120 °C.

So ist besonders überraschend, dass sowohl die Quartärnisierungsreaktion an der Halogenalkylgruppe des eingesetzten halogenalkylfunktionellen Silans der Formel II als auch die Hydrolyse sowie die Kondensation bzw. Cokondensation der im Reaktionsgemisch vorliegenden Verbindungen II und/oder IV bzw. deren Hydrolyseprodukte nicht nur gleichzeitig, d. h. im Sinne einer Eintopfreaktion, sondern darüber hinaus auch noch weitgehend selektiv abläuft.

Gegenstand der Erfindung sind quartäre-aminoalkoholfunktionelle, siliciumorganische Verbindungen, umfassend quartäre-aminoalkoholfunktionelle Silanole sowie quartäre-aminoalkoholfunktionelle Siloxanololigomere mit Si-O-vernetzten Strukturelementen (nachfolgend auch kurz Silanole sowie Siloxanololigomere genannt), die kettenförmige, cyclische und/oder vernetzte Strukturen bilden, und die erhältlich sind aus einer Umsetzung von mindestens einem Silan der Formeln II, IV oder mindestens einem Hydrolyse-, Kondensations- oder Cokondensationsprodukt ausgehend von Silanen der Formel II und/oder IV, Wasser und mindestens einem Aminoalkohol der Formel III und optional der dabei gebildete Hydrolysealkohol zumindest teilweise aus dem System entfernt wird, - wobei mindestens eine Struktur besagter quartäre-aminoalkoholfunktionelle, siliciumorganische Verbindungen in idealisierter Form der allgemeinen Formel I entspricht,

$$(R^1O)[(R^1O)_{1-x-y}(R^2)_xSi(C^+)_{1+y}O]_aR^1\ [a \cdot (1+y)]Hal^- \qquad (I)$$

mit $C^+$ in Formel I unabhängig gleich einer Gruppe der Formel V

$$-(R^3)_nCH_2-N^+[-(CH_2)_mOH]_z(R^4)_{3-z} \qquad (V)$$

- in Formel I sind $R^1$ unabhängig voneinander Wasserstoff oder eine lineare, verzweigte oder cyclische Alkyl-Gruppe mit 1 bis 8 C-Atomen, besonders bevorzugt ist $R^1$ im Wesentlichen Wasserstoff und gegebenenfalls eine entsprechende Alkyl-Gruppe, $R^2$ sind gleich oder verschieden und $R^2$ steht für eine lineare, verzweigte oder cyclische Alkyl-Gruppe mit 1 bis 8 C-Atomen oder für eine Aryl-, Arylalkyl- oder Acyl-Gruppe,
- in Formel V sind $R^3$ gleich oder verschieden und $R^3$ stellt eine lineare, verzweigte oder cyclische Alkylengruppe mit 1 bis 18 C-Atomen dar, $R^4$ sind gleich oder verschieden und $R^4$ steht für eine Gruppe umfassend C1- bis C16-Atome, insbesondere ist $R^4$ eine Kohlenwasserstoff-Gruppe, bevorzugt eine Alkyl-Gruppe mit 1 bis 16 C-Atomen, besonders bevorzugt mit 1 bis 7 C-Atomen,
- in Formeln I und V sind unabhängig n gleich 0 oder 1, m eine ganze Zahl zwischen 1 und 16 und z gleich 1 oder 2 oder 3 und Hal steht für Chlor oder Brom, und x gleich 0 oder 1, y gleich 0 oder 1 und (x + y) gleich 0 oder 1 sind, und a ist größer gleich 1, insbesondere größer gleich 2, insbesondere größer gleich 4
- wobei das Silan der Formel II ein Halogenalkylsilan ist,

$$(R^10)_{3-x-}y(R^2)_xSi[(R^3)_nCH_2Hal]_{i+y} \qquad (II),$$

und das Silan der Formel IV eine quartäre-aminoalkoholfunktionelle, siliciumorganische Verbindung ist

$$(R^10)_{3-x-y(}R^2)_xSi[(R^3)_nCH_2-N^+[-(CH_2)_mOH]_z(R^4)_{3-z}]_{1+y} \cdot (1+y)\ [Hal^-] \qquad (IV),$$

und der Aminoalkohol der Formel III entspricht,

$$[HO-(CH_2)_m-]_zN(R^4)_{3-z} \qquad (III),$$

- wobei in Formel II, III und/oder IV unabhängig Gruppen $R^1$ gleich oder verschieden sind und $R^1$ für ein Wasserstoff, eine lineare, verzweigte oder cyclische Alkyl-Gruppe mit 1 bis 8 C-Atomen, eine Aryl-, Arylalkyl- oder Acyl-Gruppe steht, Gruppen $R^2$ gleich oder verschieden sind und $R^2$ für eine lineare, verzweigte oder cyclische Alkyl-Gruppe mit 1 bis 8 C-Atomen oder für eine Aryl-, Arylalkyl- oder Acyl-Gruppe steht, $R^{3,}$ $R^4$, Hal sowie n, m und z unabhängig voneinander wie vorstehend definiert sind, und x gleich 0, 1 oder 2, y gleich 0, 1 oder 2 und (x + y) gleich 0, 1 oder 2 sind.

Bevorzugte Siloxanololigomere, insbesondere der nur in idealisierter Form dargestellten allgemeinen Formel I, weisen einen hohen Anteil von D-Strukturen und T-Strukturen von jeweils über 10 % ($^{29}$Si-NMR) auf. Vorzugsweise können sie zwischen 30 bis 60 % D-Strukturen und 30 bis 60 % T-Strukturen aufweisen, insbesondere von jeweils um 40 bis 55 %, besonders bevorzugt jeweils um 40 bis 50 %, wobei in Summe mit nur geringfügig vorhandenen M-Strukturen und Silanen 100 % erreicht werden. (Zur Definition von M- D-, T- Strukturen s. Walter Noll, Chemie und Technologie der Silicone, 1968, Verlag Chemie GmbH, Weinheim, Kapitel 1).

Dabei ist m vorzugsweise 1, 2, 3, 4, 5, 6 oder 7 und $R^4$ eine Gruppe umfassend 1, 2, 3, 4, 5, 6 oder 7 C-Atome, besonders bevorzugt ist m = 1, 2 oder 3, erfindungsgemäß ist m = 2; und $R^4$ ist eine lineare, verzweigte oder cyclische Alkylgruppe mit 1 bis 16 C-Atomen, insbesondere eine Alkylgruppe mit 1 bis 7 C-Atomen, bevorzugt eine Alkylgruppe mit 1 bis 6 C-Atomen, besonders bevorzugt mit 1 bis 4 C-Atomen, die darüber hinaus substituiert sein kann, wobei gegebenenfalls zwei Gruppen $R^4$ ihrerseits miteinander verknüpft sind und mit dem Stickstoff des tertiären Amins einen Cyclus bilden.

Erfindungsgemäß sind die quartären-aminoalkoholfunktionellen, siliciumorganischen Verbindungen als Siloxanololigomere, wie Formel I, wobei besonders bevorzugt $R^1$ im Wesentlichen Wasserstoff entspricht, wasserlöslich, vorteilhaft sind auch die Verbindungen der Formel IV wasserlöslich.

Erfindungsgemäß werden als Aminoalkohole der Formel III bevorzugt N,N-Dimethylethanolamin, N,N-Diethylethanolamin, N-Methyldiethanolamin, N-Ethyldiethanolamin, Triethanolamin oder mindestens zwei der zuvor genannten Verbindungen eingesetzt.

Die reine Quartärnisierungsreaktion von Verbindungen der Formel II bzw. gemäß Komponente A und des tertiären Aminoalkohols der Formel III gemäß Komponente B zu mindestens einer quartären-aminoalkoholfunktionellen, siliciumorganischen Verbindung der Formel I und/oder IV ist nachfolgend modellhaft dargestellt, wobei die Formeln II und III wie vorstehend definiert sind:

$$(R^10)_{3-x-y}(R^2)_xSi[(R^3)_nCH_2Hal]_{1+y} + [HO-(CH_2)_m-]_zN(R^4)_{3-z} \quad ->$$

(II) (III)

$$(R^10)_{3-x-y}(R^2)_xSi[(R^3)_nCH_2-N^+[-(CH_2)_mOH]_z(R^4)_{3-z}]_{1+y} \cdot (1+y)\,[Hal^-]$$

(IV)

Ferner können sich während der Umsetzung durch Hydrolyse sowie Kondensation von Verbindungen der Formeln II und/oder entstandenen Quartärnisierungsprodukten (IV) so genannte oligomere und/oder polymere quartäre aminoalkoholfunktionelle, siliciumorganische Verbindungen, umfassend Silanole bzw. im Wesentlichen Siloxanololigomere bilden, wie sie nachfolgend erläutert sind. Dabei können vorliegende Silanole bzw. Siloxanololigomere freilich auch Si-gebundene Alkoxygruppen enthalten, vgl. dazu auch Formel I.

So wird nach chemischem Verständnis angenommen, dass unter den erfindungsgemäßen Reaktionsbedingungen die Umsetzung von Verbindungen der Formeln II und III unter Quartärnisierung und zumindest teilweisen Hydrolyse abläuft, wie es nachfolgend modellhaft an 3-Chlorpropyltriethoxysilan (CPTEO) und N,N-Dimethylethanolamin veranschaulicht wird, ohne das Modell darauf zu beschränken.

Quartärnisierung und partielle bzw. vollständige Hydrolyse:

$Cl-(CH_2)_3-Si(OEt)_3 + [HO-(CH_2)_2-]N(CH_3)_2 + H_2O -> (EtO)_2(HO)Si[-(CH_2)_3-N^+[-(CH_2)_2OH](CH_3)_2] \cdot Cl^- + EtOH$

$Cl-(CH_2)_3-Si(OEt)_3 + [HO-(CH_2)_2-]N(CH_3)_2 + 2\ H_2O -> (EtO)(HO)_2Si[-(CH_2)_3-N^+[-(CH_2)_2OH](CH_3)_2] \cdot Cl^- + 2\ EtOH$

$Cl-(CH_2)_3-Si(OEt)_3 + [HO-(CH_2)_2-]N(CH_3)_2 + 3\ H_2O -> (HO)_3Si[-(CH_2)_3-N^+[-(CH2)_2OH](CH_3)_2] \cdot Cl^- + 3\ EtOH$

Kondensation:

$x\ (HO)_3Si[-(CH_2)3-N^+[-(CH_2)_2OH](CH_3)_2] \cdot Cl^- -> [(HO-)_2Si[-(CH_2)_3-N^+[-(CH_2)_2OH](CH_3)_2]]-[O-Si[-(CH_2)_3-N^+[-(CH_2)_2OH](CH_3)_2](OH)]_{x-2}-[O-Si[-(CH_2)_3-N^+[-(CH_2)_2OH](CH_3)_2](OH)_2] \bullet x\ Cl^- + x\ H_2O$

Je nach Hydrolysegrad, können statt Hydroxygruppen auch noch Alkoxy-Gruppen vorhanden sein. Dabei kann x eine Zahl von 2 bis $\infty$ sein.

Gegenstand der Erfindung ist auch ein Verfahren zur Herstellung einer Zusammensetzung enthaltend quartäre-aminoalkoholfunktionelle, siliciumorganische Verbindungen, umfassend quartäre-aminoalkoholfunktionelle Silanole sowie Siloxanololigomere als auch Zusammensetzungen erhältlich nach diesem Verfahren, bevorzugt Zusammensetzung enthaltend quartäre-aminoalkoholfunktionelle Siloxanololigomere indem man

- als Komponente A

(i) mindestens ein halogenalkylfunktionelles Alkoxysilan der allgemeinen Formel II

$(R^10)_{3-x-y}(R^2)_xSi[(R^3)_nCH_2Hal]_{1+y}$ (II),

worin Gruppen $R^1$ gleich oder verschieden sind und $R^1$ für ein Wasserstoff, eine lineare, verzweigte oder cyclische Alkyl-Gruppe mit 1 bis 8 C-Atomen, eine Aryl-, Arylalkyl- oder Acyl-Gruppe steht, Gruppen $R^2$ gleich oder verschieden sind und $R^2$ für eine lineare, verzweigte oder cyclische Alkyl-Gruppe mit 1 bis 8 C-Atomen oder für eine Aryl-, Arylalkyl- oder Acyl-Gruppe steht, Gruppen $R^3$ gleich oder verschieden sind und $R^3$ eine lineare, verzweigte oder cyclische Alkylengruppe mit 1 bis 18 C-Atomen darstellt, n gleich 0 oder 1 ist und Hal für Chlor oder Brom steht, und x gleich 0, 1 oder 2, y gleich 0, 1 oder 2 und (x + y) gleich 0, 1 oder 2 sind, oder

(ii) ein Hydrolyse- oder Kondensationsprodukt von mindestens einem Alkoxysilan der zuvor genannten allgemeinen Formel II, Hydrolysate und/oder Homo-Kondensat oder Gemische mindestens zweier Alkoxysilane der Formel II dieser einsetzt,
oder

(iii) ein Gemisch aus mindestens einem Alkoxysilan der zuvor genannten allgemeinen Formel II und einem Hydrolyse- und/oder Kondensationsprodukt von mindestens einem Alkoxysilan der zuvor genannten allgemeinen Formel II

- mit einem tertiären Aminoalkohol der allgemeinen Formel III als Komponente B,

$[HO-(CH_2)_m]_z-N(R^4)_{3-z}$ (III),

worin Gruppen $R^4$ gleich oder verschieden sind und $R^4$ für eine Gruppe umfassend C1- bis C16-Atome steht, m für eine ganze Zahl zwischen 1 und 16, insbesondere für eine Kohlenwasserstoff- oder Alkyl-Gruppe wie vorstehend definiert, und z für 1 oder 2 oder 3 stehen, bevorzugt ist m = 1 bis 7 und $R^4$ eine Gruppe umfassend C1- bis C7-Atome, besonders bevorzugt ist m = 1, 2 oder 3, erfindungsgemäß ist m = 2; und $R^4$ eine lineare, verzweigte oder cyclische Alkylgruppe mit 1 bis 16 C-Atomen, insbesondere eine Alkylgruppe mit 1 bis 7 C-Atomen, bevorzugt eine Alkylgruppe mit 1 bis 6 C-Atomen, besonders bevorzugt mit 1 bis 4 C-Atomen, die darüber hinaus substituiert sein kann, wobei gegebenenfalls zwei Gruppen $R^4$ ihrerseits miteinander verknüpft sind und mit dem Stickstoff des tertiären Amins einen Cyclus bilden, besonders vorzugsweise ist der Aminoalkohol N,N-Dimethylethanolamin, N,N-Diethylethanolamin, N-Methyldiethanolamin, N-Ethyldiethanolamin, Triethanolamin oder ein Gemisch umfassend mindestens zwei der Verbindungen,

- umsetzt,

- das Verfahren in mindestens einem Schritt in Gegenwart, und/oder insbesondere unter Zusatz, einer definierten Menge Wasser durchführt, und

- optional den gebildeten Hydrolysealkohol zumindest teilweise aus dem System entfernt, bevorzugt wird der gebildete Hydrolysealkohol als auch gegebenenfalls zugesetztes Lösemittel im Wesentlichen vollständig entfernt.

Gemäß bevorzugter Verfahrensvarianten führt man die Umsetzung der Komponente A und der Komponente B in Gegenwart einer definierten Menge Wasser durch oder setzt die Komponente A mit Komponente B um und hydrolysiert anschließend in Gegenwart einer definierten Menge Wasser, vorzugsweise weist die Komponente A, insbesondere der Formel II, $R^1$ gleich Alkyl mit 1 bis 4 C-Atomen, Acyl, und $R^3$ eine lineare Alkylengruppe mit 1, 2, 3, 4, 5, 6, 7 C-Atomen, bevorzugt mit 2 C-Atomen, auf.

Erfindungsgemäß setzt man als Komponente A mindestens eine Siliciumverbindung ausgewählt aus 3-Chlorpropyltrimethoxysilan, 3-Chlorpropyltriethoxysilan, 3-Chlorpropyl-methyldimethoxysilan, 3-Chlorpropyl-methyldiethoxysilan, 3-Chlorpropyl-dimethylethoxysilan oder 3-Chlorpropyl-dimethylmethoxysilan oder ein Hydrolyse- oder Kondensationsprodukt der zuvor genannten Alkoxysilane ein.

In das erfindungsgemäße Verfahren wird besonders bevorzugt ein halogenalkylfunktionelles Silan der Formel II ausgewählt aus der folgenden Gruppe eingesetzt: Chlorpropyltrimethoxysilan, Chlorpropyltriethoxysilan, Chorpropylmethyldimethoxysilan und Chlorpropylmethyldiethoxysilan und/oder dessen Hydrolyse- und/oder Kondensationsprodukt.

In bevorzugten Verfahren ist $R^3$ in Formel II oder IV ein lineares, verzweigtes und/oder cyclisches Alkylen mit 1 bis 18 C-Atomen, insbesondere ein Methylen ($-CH_2-$), Ethylen [$-(CH_2)_2-$], Propylen [$-(CH_2)_3-$], Butylen [$-(CH_2)_4-$ oder $-(CH_2)CH(CH_3)(CH_2)-$], und n = 0 mit Hal gleich Chlor. Besonders bevorzugt ist die Gruppierung $-[(R^3)_nCH_2Hal]$

eine Chlormethylen-, Chlorethylen-, 3-Chlorpropylen-, 2-Chlorpropylen-, 2-Chlor-iso-propylen-, Chlorbutylen-, Chlor-isobutylen-, Chlorpentyl-, Chlorhexyl-, Chlorcyclohexyl-, Chlorheptyl-, Chloroctyl-, Chlor-n-octyl-, Chlorcyclooctyl-Gruppe.

Weitere beim erfindungsgemäßen Verfahren einsetzbare Halogenalkylsilane der Formel II sind, insbesondere ausgewählt aus der Gruppe, 3-Chlorpropyltrimethoxysilan, 3-Chlorpropyltriethoxysilan, 3-Chlorpropyltripropoxysilan, Chlorpropyl-methyldimethoxysilan, Chlorpropylmethyldiethoxysilan, Chlorpropyldimethylethoxysilan, Chlorpropyldimethylmethoxysilan, Chlorethyltrimethoxysilan, Chlorethyltriethoxysilan, Chlorethylmethyldimethoxysilan, Chlorethylmethyldiethoxysilan, Chlorethyldimethylmethoxysilan, Chlorethyldimethylethoxysilan, Chlormethyltriethoxysilan, Chlormethyltrimethoxysilan, Chlormethylmethyldimethoxysilan, Chlormethylmethyldiethoxysilan, Chlormethyldimethylmethoxysilan, Chlormethyldimethylethoxysilan, 2-Chlorisopropyltris(methoxyethoxy)silan, 3-Chlorpropylcyclohexyldiethoxysilan, 3-Chlorisobutyltrimethoxysilan, 3-Chlorisobutyltriethoxysilan, 3-Chlorpropylcyclohexyldimethoxysilan, 3-Bromisropyldiethylcyclohexoxysilan, 3-Chlorpropylcyclopentyldienethoxysilan, 3-Bromisobutyltrimethoxysilan, 3-Chlorisobutylbis(ethoxyethoxy)methylsilan, 4-Brom-n-butyltriethoxysilan, 4-Chlor-n-butyldiethoxycyclopentylsilan, 5-Chlor-n-pentyltri-n-butoxysilan, 5-Brom-n-pentyltriethoxysilan, 4-Brom-3-methylbutyldimethoxyphenylsilan, 5-Brom-n-pentyltri-n-butoxysilan, 5-Chlor-n-pentyltriethoxysilan, 6-Chlor-n-hexylethoxydimethylsilan, 6-Brom-n-hexylpropyldipropoxysilan, 6-Chlor-n-hexyldiethoxyethylsilan, 7-Chlor-n-heptyltriethoxysilan, 7-Chlorheptyldimethoxycycloheptylsilan, 7-Brom-n-heptyl-, diethoxycyclooctylsilan, 8-Chlor-n-oxtyltriethoxysilan, 8-Brom-n-octyldimethylcyclohexoxysilan, 3-Chlorpropyldiethoxyphenylsilan, 3-Chlorpropylmethoxyethoxybenzylsilan, 3-Brompropyldimethoxybenzylsilan und/oder deren Hydrolyse- und/oder Homo- und/oder Co-Kondensationsprodukte oder zweckmäßig 1,4-Chlorphenyltrimethoxysilan, 1,4-Chlorbenzyltriethoxysilan und Chlormethyl-p-methylphenyl-trimethoxysilan und/oder deren Hydrolyse- und/oder Homo- und/oder Co-Kondensationsprodukte eingesetzt werden. Besonders bevorzugt werden reine Chloralkyl-substituierte Alkoxysilane in dem erfindungsgemäßen Verfahren eingesetzt.

Besonders vorteilhaft setzt man die Komponenten A und B in Bezug auf die Halogenalkyl-Gruppe der Komponente A und den tertiären Stickstoff der Komponente B in einem molaren Verhältnis von 2 : 1 bis 1 : 100 ein, insbesondere von 2 : 1 bis 1 : 10, bevorzugt von 2 : 1 bis 1 : 5, besonders bevorzugt von etwa 1 : 1 bis etwa 1 : 1,5. 1 : 1, wobei man gegebenenfalls zunächst ein Verhältnis von 1 : 1 einstellt und nachfolgend noch je Charge etwa 0,2 der Komponente B in Bezug auf die vorliegende Komponente A in 1 bis 4 Chargen zugibt.

Als besonders vorteilhaft hat sich eine Verfahrensführung erwiesen bei der man Wasser in einer Menge von 0,5 bis 500 mol Wasser je mol vorliegenden Silicium-Atome der Komponente A einsetzt, bevorzugt in mindestens einem der Hydrolyse-Schritte 0,5 mol Wasser je mol hydrolysierbarer Alkoxy-Gruppe am Silan der Formel II, wobei insgesamt bevorzugt insbesondere 0,5 bis 25 mol Wasser, bevorzugt 5 bis 25 mol Wasser je mol Silicium-Atome bezüglich der eingesetzten Komponente A, besonders bevorzugt 10 bis 25 mol Wasser je mol der Silicium-Atome, insbesondere 12 bis 25 mol Wasser je mol Silicium-Atome eingesetzt werden.

Dabei ist es ferner von Vorteil, wenn man das Wasser, insbesondere in definierten Mengen, kontinuierlich oder diskontinuierlich chargenweise zur Komponente A gegebenenfalls im Gemisch mit der Komponente B oder zur gebildeten quartären-aminoalkoholfunktionellen, siliciumorganischen Verbindung der Formel IV

$$(R^10)_{3-x-y}(R^2)_xSi[(R^3)_nCH_2\text{-}N+[\text{-}(CH_2)_mOH]_z(R^4))_{3-z}]_{1+y} \cdot (1+y)\ [Hal^-] \qquad (IV),$$

dosiert, vorzugsweise gibt man das Wasser diskontinuierlich unter Rühren zu, besonders bevorzugt chargenweise, vorteilhaft in 1 bis 15 Chargen, insbesondere in 2 bis 12 Chargen, wobei in Formel IV $R^1$, $R^2$, $R^3$, $R^4$, x, y, z, n und m die vorstehend definierte Bedeutung, insbesondere gemäß Anspruch 2, aufweisen. Weiter bevorzugt gibt man chargenweise jeweils als definierte Menge Wasser 0,5 bis 4,0 mol Wasser je mol Silicium-Atome zu, bevorzugt um 1,0 bis 2,0 mol Wasser je mol Silicium-Atome, besonders bevorzugt um 1,5 mol plus/minus 0,5 mol, und gegebenenfalls gibt man eine letzte Charge mit 5 bis 25 mol Wasser je mol Silicium-Atome zu.

Je nach Verfahrensführung hat es sich als vorteilhaft erwiesen, wenn man die Umsetzung in Gegenwart eines Lösemittels, insbesondere einem Alkohol oder einem Alkoholgemisch oder einem Alkohol/Wasser-Gemisch, wobei auch Glycole den Alkoholen zuzurechnen sind, durchführt, bevorzugt in Gegenwart des bei der Hydrolyse der Verbindung der Formel II entstehenden Alkohols, besonders bevorzugt in Gegenwart von Ethanol, Methanol, n-Propanol oder iso-Propanol. Dabei entfernt man das zugesetzte Lösemittel geeigneterweise bei der Entfernung des bei der Umsetzung entstandenen Hydrolysealkohols aus dem System.

Der bei der Umsetzung gebildete Hydrolysealkohol wird im Wesentlichen vollständig entfernt, vorzugsweise durch Destillation, insbesondere bereits während der Umsetzung. Gemäß einer besonders bevorzugten Verfahrensführung kann etwa die durch Destillation entfernte Menge an Hydrolysealkohol und Wasser im azeotropen Gemisch durch zusätzliche Zugabe von Wasser ausgeglichen werden.

Flüchtige Lösemittel, wie ein zugesetztes Lösemittel und/oder der bei der Umsetzung durch Hydrolyse gebildete Alkohol, d.h. gegebenenfalls zu flüchtigem Lösemittel hydrolysierbare Gruppen, insbesondere Hydrolysealkohol, entfernt man bis auf ein Gehalt in der Gesamtzusammensetzung von unter 12 Gew.-% bis 0 Gew.-%, vorzugsweise durch Destillation nach dem Fachmann geläufigen Verfahren. Als frei von Lösemitteln gilt eine Zusammensetzung, wenn der

Gehalt an Lösemitteln in der Gesamtzusammensetzung auf unter 10 Gew.-% bis 0 Gew.-%, besonders bevorzugt unter 5 Gew.-%, ganz besonders bevorzugt unter 2 Gew.-% bis 0,0001 Gew.-%, insbesondere 1 bis ≤ 0,5 Gew.-%, bevorzugt 0,5 bis ≤ 0,1 Gew.-% eingestellt werden konnte, wobei das Entfernen von flüchtigem Lösemittel während der Umsetzung und/oder danach durch Destillation, insbesondere unter vermindertem Druck im Bereich von 0,1 bis 1000 mbar, bevorzugt von 80 bis 300 mbar, besonders bevorzugt im Bereich von 80 bis 180 mbar, erfolgen kann. Geeigneterweise kann man aber auch den Druck im Laufe der Umsetzung von Umgebungsdruck auf einen verminderten Druck absenken. Die Destillation kann diskontinuierlich oder auch kontinuierlich mittels Destillationskolonne, Dünnschichtverdampfer sowie weitere dem Fachmann geläufigen Apparaten erfolgen. Bei der Destillation wird vorzugsweise destilliert bis am Kopf der Trennkolonne nur noch Wasser nachweisbar ist. Abdestilliertes Wasser kann durch erneute Wasserzugabe ergänzt werden. Am Ende der Destillation kann die gewünschte Endkonzentration der Lösung durch Zugabe von weiterem Wasser eingestellt werden.

Nach dem erfindungsgemäßen Verfahren führt man die Umsetzung vorteilhaft bei einem Druck von 1 mbar bis 100 bar, vorzugsweise bei etwa 1 mbar bis 1,1 bar, bevorzugt bei Umgebungsdruck (Normaldruck), und einer Temperatur von 20 und 150 °C durch, bevorzugt zwischen 40 bis 120 °C, besonders bevorzugt zwischen 60 bis 100 °C, insbesondere von 80 bis 95 °C.

Nachfolgend werden bevorzugte Verfahrensführungen zur Herstellung der Zusammensetzungen näher beschrieben, ohne den Gegenstand der Erfindung darauf zu beschränkten, der Fachmann kennt zusätzliche übliche Verfahrensvariationen.

Zur Durchführung der erfindungsgemäßen Verfahren hat es sich als vorteilhaft erwiesen, wenn man vor der Umsetzung von Halogenalkyltrialkoxysilan der Formel II mit einem Aminoalkohol der Formel III, insbesondere von 3-Chlorpropyltriethoxysilan (CPTEO) mit N,N-Dimethylethanolamin, das Halogenalkyltrialkoxysilan vorhydrolysiert, und freigesetzten Hydrolysealkohol abdestilliert, wie beispielsweise in Beispiel 5 aufgezeigt, ohne das Verfahren auf dieses Beispiel zu beschränken. Erfolgt keine Vorhydrolyse von Halogenalkyltrialkoxysilan der Formel II, insbesondere von CPTEO , vor der Umsetzung mit dem Aminoalkohol, insbesondere mit N,N-Dimethylethanolamin, setzt man vorteilhaft den Aminoalkohol im Überschuss zu, um erhebliche Ausfällungen von CPTEO zu vermeiden, wie beispielhaft in Beispiel 3 aufgezeigt, ohne das Verfahren auf dieses Beispiel zu beschränken. Sofern erforderlich kann man überschüssigen Aminoalkohol, wie N, N-Dimethylethanolamin, destillativ abtrennen. Generell kann in allen Verfahren ein Halogenalkyltrialkoxysilan der Formel II, insbesondere CPTEO, dass nicht vollständig mit dem Aminoalkohol der Formel III, wie N,N-Dimehtylethanolamin, reagiert hat, prinzipiell durch Wasserzugabe ausgefällt werden, wie beispielsweise in Beispiel 2. Erfolgt die Umsetzung des Halogenalkyltrialkoxysilans der Formel II, insbesondere von CPTEO, mit dem Aminoalkohol der Formel III, wie N,N-Dimethylethanolamin, bei zu hohen Temperaturen, beispielsweise bei Temperaturen von 140°C-150°C, so kann dies zu intensiven Verfärbungen des Produktes führen, wie beispielsweise im Beispiel 4 dargestellt.

Gegenstand der Erfindung sind insbesondere auch Verfahrensvarianten, in denen man

a) die Komponente A zusammen mit einem Lösemittel vorlegt, und eine definierte Menge Wasser zugibt, die Komponente B zusetzt, gebildeten Hydrolysealkohol zumindest teilweise aus dem System entfernt, wobei man Wasser in definierten Mengen zusetzt, oder

b) die Komponente A vorlegt und ein Lösemittel zugibt, eine definierte Menge Wasser zugibt, die Komponente B zusetzt, gebildeten Hydrolysealkohol zumindest teilweise aus dem System entfernt, wobei man Wasser in definierten Mengen zusetzt, oder

c) die Komponente A vorlegt und ein Lösemittel zugibt, eine definierte Menge Wasser zugibt, gebildeten Hydrolysealkohol zumindest teilweise aus dem System entfernt, danach die Komponente B zusetzt und gebildeten Hydrolysealkohol zumindest teilweise aus dem System entfernt, eine definierte Menge Wasser zugibt, und gebildeten Hydrolysealkohol zumindest teilweise aus dem System entfernt, wobei man Wasser in definierten Mengen zusetzt, oder

d) die Komponente A mit der Komponente B bei erhöhter Temperatur reagieren lässt,
und weitere Komponente B in definierter Menge zusetzt, und nachfolgend eine definierte Menge Wasser zugibt, gebildeten Hydrolysealkohol zumindest teilweise aus dem System entfernt, wobei man Wasser in definierten Mengen zusetzt, oder

e) die Komponente A vorlegt und ein Lösemittel zugibt, eine definierte Menge Wasser zugibt, und gebildeten Hydrolysealkohol zumindest teilweise aus dem System entfernt, nachfolgend Komponente B zusetzt, und bei erhöhter Temperatur eine definierte Menge Wasser zugibt, und gebildeten Hydrolysealkohol zumindest teilweise aus dem System entfernt, wobei man gegebenenfalls Wasser in definierten Mengen zusetzt, oder

f) die Komponente A zusammen mit einem Lösemittel vorlegt, und eine definierte Menge Wasser zugibt, gebildeten Hydrolysealkohol zumindest teilweise aus dem System entfernt, die Komponente B zusetzt, gebildeten Hydrolysealkohol zumindest teilweise aus dem System entfernt, wobei man Wasser in definierten Mengen zusetzt.

Weiter bevorzugt sind die konkreteren Verfahrensführungen, ohne jedoch die Erfindung darauf zu beschränken.

Besonders bevorzugt sind daher Verfahren zur Herstellung der Zusammensetzungen umfassend quartären-aminoalkoholfunktionellen, siliciumorganischen Verbindungen, insbesondere von quartären-aminoalkoholfunktionellen Siloxanolen der Verbindungen, wie bspw. der idealisierten Formel I, in denen man

a) die Komponente A zusammen mit einem Lösemittel, insbesondere Alkohol, wie Ethanol oder Methanol, vorlegt, und eine Charge einer definierten Menge Wasser zugibt, insbesondere etwa 1,5 Mol Wasser je Mol Silicium-Atome, die Komponente B zusetzt und, insbesondere unter Rückfluss, erhitzt, gebildeten Hydrolysealkohol zumindest teilweise unter Normaldruck aus dem System entfernt, wobei man chargenweise Wasser in definierten Mengen zusetzt, insbesondere etwa weitere 1 bis 15 Chargen mit je 0,5 bis 3 Mol, bevorzugt je 1,5 Mol Wasser je Mol Sil icium-Atome, nachfolgend entfernt man den Hydrolysealkohol unter Vakuum und setzt Wasser zu, bis der Gehalt des Hydrolysealkohols unter 5 Gew.-% in der Gesamtzusammensetzung beträgt; vorzugsweise wird der Hydrolysealkohol solange abdestilliert und neue Wasser zugegeben, bis die Zusammensetzung im Wesentlichen frei von Lösemittel oder Hydrolysealkohol ist, oder
b) man legt die Komponente A vor und gibt ein Lösemittel zu, insbesondere Alkohol, bevorzugt der bei der Hydrolyse entstehende Alkohol, bspw. Ethanol oder Methanol, gibt eine Charge einer definierten Menge Wasser zu, insbesondere etwa 0,5 bis 3,0 mol Wasser je Mol Silicium-Atome, bevorzugt je 1,5 Mol Wasser je Mol Silicium-Atome, vorzugsweise wird somit vorhydrolysiert, man setzt die Komponente B zu und erhitzt, insbesondere unter Rückfluss, gebildeten Hydrolysealkohol entfernt man zumindest teilweise unter Normaldruck aus dem System, vorzugsweise vollständig, wobei man chargenweise Wasser in definierten Mengen zusetzt, insbesondere etwa weitere 1 bis 15 Chargen mit je 0,5 bis 3 Mol, bevorzugt je 1,5 Mol Wasser je Mol Silicium-Atome, oder
c) man legt die Komponente A vor und gibt ein Lösemittel zu, insbesondere Alkohol, bevorzugt der bei der Hydrolyse entstehende Alkohol, bspw. Ethanol oder Methanol,
anschließend gibt man eine Charge einer definierten Menge Wasser zu, insbesondere etwa 0,5 bis 3,0 mol Wasser je Mol Silicium-Atome, bevorzugt je 1,5 Mol Wasser je Mol Silicium-Atome, vorzugsweise wird somit vorhydrolysiert, gebildeten Hydrolysealkohol entfernt man zumindest teilweise unter Normaldruck aus dem System, danach setzt man die Komponente B zu, ggf. entfernt man gebildeten Hydrolysealkohol zumindest teilweise unter Normaldruck aus dem System, und erhitzt die Reaktionsmischung unter Rückfluss, man gibt eine Charge einer definierten Menge Wasser zu, und entfernt gebildeten Hydrolysealkohol zumindest teilweise unter Normaldruck aus dem System, wobei man chargenweise Wasser in definierten Mengen zusetzt, vorzugsweise vollständig, wobei man chargenweise Wasser in definierten Mengen zusetzt, insbesondere etwa weitere 1 bis 15 Chargen mit je 0,5 bis 3 Mol, bevorzugt je 1,5 Mol Wasser je Mol Silicium-Atome, oder
d) man lässt die Komponente A mit der Komponente B bei erhöhter Temperatur reagieren, und setzt weitere Komponente B in definierten Mengen diskontinuierlich oder kontinuierlich zu, bis die Komponenten A im Wesentlichen vollständig mit der Komponente B reagiert hat, insbesondere unter Bildung der Verbindung der Formel IV, danach gibt man eine Charge einer definierten Menge Wasser zu, und entfernt gebildeten Hydrolysealkohol zumindest teilweise unter Normaldruck aus dem System, wobei man chargenweise Wasser in definierten Mengen zusetzt, vorzugsweise vollständig, wobei man chargenweise Wasser in definierten Mengen zusetzt, insbesondere etwa weitere 1 bis 15 Chargen mit je 0,5 bis 3 Mol, bevorzugt je 1,5 Mol Wasser je Mol Silicium-Atome, oder
e) man legt die Komponente A vor und gibt ein Lösemittel zu, dann gibt man eine Charge einer definierten Menge Wasser zu, insbesondere etwa 0,5 bis 3,0 mol Wasser je Mol Silicium-Atome, bevorzugt je 1,5 Mol Wasser je Mol Silicium-Atome, vorzugsweise wird somit vorhydrolysiert, und man entfernt gebildeten Hydrolysealkohol unter Vakuum zumindest teilweise aus dem System, und man setzt nachfolgend Komponente B in definierten Mengen diskontinuierlich oder kontinuierlich zu, und gibt bei erhöhter Temperatur mindestens eine Charge einer definierten Menge Wasser zu, insbesondere wie vorstehend erläutert, und entfernt gebildeten Hydrolysealkohol zumindest teilweise unter Normaldruck oder unter Vakuum aus dem System, wobei man gegebenenfalls chargenweise Wasser in definierten Mengen zusetzt, insbesondere in 1 bis 15 Chargen, wie vorstehend dargelegt.

Gemäß einer weiteren bevorzugten Alternative kann man das Verfahren auch so durchführen, dass man der Komponente A optional ein Lösemittel, vorzugsweise ein Alkohol, besonders bevorzugt Methanol, Ethanol, Isopropanol, zusetzt, die Komponente A mit Wasser in einer Menge von 0,5 bis 3,0 mol Wasser je mol der vorliegenden Silicium-Atome vorhydrolysiert, bevorzugt mit 0,5 bis 2 mol Wasser je vorliegenden Silicium-Atomen, besonders bevorzugt um 1,5 mol Wasser je mol Silicium-Atome, Komponente B zusetzt, das vorliegende Reaktionsgemisch bei Umgebungsdruck oder vermindertem Druck auf eine Temperatur zwischen 20 und 150 °C einstellt, vorzugsweise um 40 bis 120 , besonders bevorzugt um 60 bis 100 °C, und den gebildeten Hydrolysealkohol zumindest teilweise, vorzugsweise im Wesentlichen vollständig, aus dem Reaktionsgemisch entfernt ebenso das gegebenenfalls eingesetzte Lösemittel und dabei optional Wasser in definierter Menge zusetzt, die so erhaltene Zusammensetzung optional mit Wasser verdünnt, wobei man den Feststoffgehalt in der Zusammensetzung bevorzugt auf 0,1 bis 99,9 Gew.-% einstellt, und nachfolgend gegebenenfalls mit mindestens einer weiteren Komponente aus der Reihe der Pigmente, Füllstoffe, Binder, Vernetzer, optische Aufheller,

Verdicker, Rheologiehilfsstoffe, Lackhilfsstoffe oder einem anderen Hilfsstoff versetzt oder in Kontakt bringt.

In den vorgenannten Verfahren ist es besonders bevorzugt, wenn man die Zusammensetzung durch Zugabe von Wasser auf eine Viskosität kleiner 1500 mPa s, einstellt, vorzugsweise auf eine Viskosität im Bereich zwischen 1 bis 300 mPa s, bevorzugt 1 bis 100 mPa s, besonders bevorzugt 5 bis 60 mPa s, erfindungsgemäß 5 bis 20 mPa s. Dem Fachmann ist klar, dass die Einstellung der Viskosität prinzipiell während der Herstellung als auch zu einem späteren Zeitpunkt, bspw. vor der Anwendung erfolgen kann.

Eine Zugabe der gesamten Wassermenge in einem Schritt für die Umsetzung kann zur Bildung von unlöslichen Niederschlägen führen, die beispielsweise zur Herstellung von Lösungen der Zusammensetzung aufwendig abfiltriert werden müssen und die Ausbeute vermindern.

Erfindungsgemäß wird in dem Verfahren vorteilhaft ein Silan der Formel II, insbesondere ein chloralkylfunktionelles Silan gegebenenfalls dessen Hydrolyse- und/oder Kondensationsprodukt, mit einem tertiären Aminoalkohol der Formel III, gegebenenfalls in Gegenwart eines Lösemittels, gemischt, in Gegenwart von 0,5 bis 200 mol Wasser je mol Silicium-Atome erfolgt eine Quartärnisierung - am Stickstoffatom unter Bildung einer Verbindung der Formel IV und/oder I - und zumindest teilweise Hydrolyse und gegebenenfalls Kondensation (der Alkoxysilane zu Silanol-Gruppen, gefolgt von einer Kondensation unter Ausbildung von Si-O-Si-Brücken) - der Verbindungen der quartären-aminoalkoholfunktionellen, siliciumorganischen Verbindungen umfassend Siloxanololigomere. Vorzugsweise kann die Umsetzung in einer Art "Eintopfreaktion", beispielsweise batchweise, durchgeführt werden, wobei während der Umsetzung bereits Hydrolysealkohol abdestilliert und im Wesentlichen gleichzeitig Wasser nachdosiert werden kann. Dabei kann der Druck im Reaktionsgefäß mit zunehmender Reaktionsdauer auch abgesenkt werden, d. h., dass man die flüchtigen organischen Anteile, insbesondere den entstandenen Hydrolysealkohol, unter vermindertem Druck zumindest anteilig durch Destillation aus dem System entfernt.

Auch kann im erfindungsgemäßen Verfahren filtriert werden oder eine erfindungsgemäß erhaltene Zusammensetzung bei Bedarf auf konventionelle Weise filtriert werden, falls Trübungen auftreten.

Erfindungsgemäß kann die Umsetzung ohne zusätzlichen Katalysator durchgeführt werden. Es kann sich jedoch als zweckmäßig erweisen einen Hydrolyse- und/oder Kondensationskatalysator zuzusetzen, beispielsweise - aber nicht ausschließlich - eine organische oder anorganische Säure, wie Ameisensäure, Essigsäure, Propionsäure, Citronensäure, Chlorwasserstoff, als Gas, konzentrierte oder wässrige Salzsäure, Borsäure, Salpetersäure, Schwefelsäure, Phosphorsäure, um nur einige zu nennen. Entsprechend kann auch zur Einstellung des pH-Wertes der Zusammensetzung oder Reaktionsmischung zu jederzeit eine anorganische oder organische Säure zugesetzt werden.

Weiter kann es bevorzugt sein als weitere Komponente im erfindungsgemäßen Verfahren Metalloxyde einzusetzen, vorzugsweise Metalloxide mit zur Kondensation fähigen Hydroxygruppen. Dies sind insbesondere Silica, pyrogene Kieselsäure, gefällte Kieselsäure, Silikate, Borsäure, Titandioxid, Aluminiumoxid, Aluminiumoxidhydrat, ATH (Aluminiumtrihydroxid, $Al(OH)_3$), Magnesiumhydroxid ($Mg(OH)_2$), Ceroxid, Yttriumoxid, Calciumoxid, Eisenoxide, Zirkoniumoxid, Hafniumoxid, Boroxid, Galliumoxid, Indiumoxid, Zinnoxid, Germaniumoxid sowie entsprechende Hydroxide und Oxidhydrate sowie Mischungen von mindestens zwei der zuvor genannten Verbindungen untereinander.

Als flüchtige Lösemittel oder zu flüchtigen Lösemitteln hydrolysierbare Gruppen werden Alkohole, wie Methanol, Ethanol, iso-Propanol, n-Propanol, und Alkoxygruppen, die zu Alkoholen hydrolysieren, Acyloxy-Gruppen enthaltende Reste sowie, die durch Hydrolyse abgeleitete Essigsäure oder Ameisensäure, oder auch Aryloxy-Gruppen, die Phenole bilden können und auch Glykole sowie teilveretherte Glykole, wie Ethylenglykol, Diethylenglykol oder Methoxyethanol, die entweder der Formulierung zugegeben werden oder durch Hydrolyse ihrer Silylester entstehen, aufgefasst.

Unter Kondensationsprodukten werden im Rahmen der Erfindung sowohl Homo- als auch Co-Kondensationsprodukte aus der Reaktion von hydrolysierten Alkoxysilanen, oligomeren oder auch polymeren Si-OH Gruppen aufweisenden siliciumorganischen Verbindungen verstanden sowie auch Kondensationsprodukte unter Beteiligung von Block-Co-Kondensaten, der zunächst jeweils hydrolysierten und kondensierten Verbindungen der Formeln II und IV, die auch nachfolgend mit Aminoalkoholen noch zu vollständig quartärnisierten Block-Co-Kondensaten umgesetzt werden können.

Gegenstand der Erfindung ist somit auch eine quartäre-aminoalkoholfunktionelle, siliciumorganische Verbindung der Formel IV, gemäß vorstehender Definition für $R^1$, $R^2$, $R^3$, $R^4$, Hal, x, y, z n und m der Formel IV oder gemäß Anspruch 1, insbesondere als Zwischenprodukt zur Herstellung des in idealisierter Form als Formel I dargestellten quartären-aminoalkoholfunktionellen Siloxanololigomers

$$(R^10)_{3-x-y}(R^2)_xSi[(R^3)_nCH_2\text{-}N^+[\text{-}(CH_2)_mOH]_z(R^4)_{3-z}]_{1+y} \cdot (1+y)\ [Hal^-] \qquad (IV),$$

Ebenfalls Gegenstand der Erfindung ist ein Verfahren zur Herstellung einer quartären-aminoalkoholfunktionellen, siliciumorganischen Verbindung der Formel IV

$$(R^10)_{3-x-y}(R^2)_xSi[(R^3)_nCH_2\text{-}N^+[\text{-}(CH_2)_mOH]_z(R^4)_{3-z}]_{1+y} \cdot (1+y)\ [Hal^-] \qquad (IV),$$

indem man das halogenalkylfunktionelle Silan der Formel II, wie vorstehend oder wie in Anspruch 2 definiert, mit einem

Aminoalkohol der Formel III, wie vorstehend oder wie in Anspruch 2 definiert, zu einer Verbindung der Formel IV, wie vorstehend oder wie in Anspruch 1 definiert, umsetzt. Insbesondere lässt man ein Silan der Formel II mit einem Silan der Formel III bei erhöhter Temperatur reagieren, gegebenenfalls in Gegenwart eines vorzugsweise inerten Lösemittels, und setzt weiteres Silan in definierten Mengen diskontinuierlich oder kontinuierlich zu, bis das Silan der Formel II im Wesentlichen vollständig mit dem Aminoalkohol der Formel III reagiert hat. Die Aufarbeitung kann nach den dem Fachmann üblichen Verfahren und Methoden, wie beispielsweise Destillation, ggf. mit einem Dünnschichtverdampfer erfolgen.

Ein weiterer Gegenstand der Erfindung ist somit auch eine Zusammensetzung enthaltend quartäre-aminoalkoholfunktionelle, siliciumorganische Verbindungen, insbesondere quartäre-aminoalkoholfunktionelle Siloxanololigomere, wie gemäß der idealisierten Formel I, und Verbindungen der Formel IV, und Wasser, die erhältlich ist nach einem der vorstehend erläuterten Verfahren oder nach einem Verfahren gemäß einem der Ansprüche 2 bis 14 oder 16. Dabei ist es besonders bevorzugt, wenn die in dem Verfahren erhältlichen quartären-aminoalkoholfunktionellen, siliciumorganischen Verbindungen wasserlösliche sind, insbesondere auch die Siloxanololigomere.

Die erfindungsgemäßen Zusammensetzungen zeichnen sich vorteilhaft durch eine niedrige Viskosität bei gleichzeitig hohem Feststoffgehalt aus, wie durch die Ausführungsbeispiele belegt wird. Diese Kombination von niedriger Viskosität und hohem Feststoffgehalt ist eine notwenige Voraussetzung für eine hohe Kapazität bei der Herstellung von Beschichtungen. Gleichzeitig sind die erfindungsgemäßen Zusammensetzungen im Wesentlichen VOC-frei. Somit weisen die erfindungsgemäßen Zusammensetzungen eine deutlich verbesserte Performance als bekannte Zusammensetzungen auf. Alkohol enthaltende Zusammensetzungen sind dadurch jedoch nicht grundlegend ausgeschlossen.

Die erfindungsgemäß erhaltene Zusammensetzung ist in der Regel flüssig und niedrig bis leicht viskos, wobei die Viskosität insbesondere unter 1500 mPa s bis 0,001 mPa s beträgt, vorzugsweise zwischen 1000 und 1 mPa s, bevorzugt unter 300 mPa s, vorzugsweise unter 200 mPa s, besonders bevorzugt unter 100 mPa s, besser zwischen 100 mPa s und 1 mPa s, weiter bevorzugt sind Bereiche von 50 bis 1 mPa s, insbesondere von 20 und 5 mPa s (die Viskosität wird gemäß DIN 53015 bestimmt).

Weiter ist es bevorzugt, wenn die Zusammensetzungen einen Feststoffgehalt in der Zusammensetzung von 0,1 bis 99,9 Gew.-% aufweisen, vorzugsweise von 0,5 bis 90 Gew.-%, insbesondere von 5 bis 70 Gew.-%, bevorzugt von 7 bis 60 Gew.%, besonders bevorzugt von 30 bis 60 Gew.-%, wobei alle Bestandteile in der Zusammensetzung in Summe 100 Gew.-% ergeben.

Dabei ist es besonders bevorzugt, wenn die Zusammensetzungen einen Feststoffgehalt bevorzugt von 7 bis 60 Gew.%, besonders bevorzugt von 30 bis 60 Gew.-%, vorzugsweise von 40 bis 60 Gew.-% aufweisen und die Zusammensetzung zugleich eine Viskosität von < 1500 mPa s, vorzugsweise ≤ 1000 mPa s, besonders bevorzugt 1 bis 300 mPa s, insbesondere von 1 bis 100 mPa s, besser von 5 bis 20 mPa s, aufweist. Eine besonders bevorzugt Zusammensetzung weist einen Feststoffgehalt von 30 bis 60 Gew.-% bei einer Viskosität von 5 bis 20 mPa s auf. Erfindungsgemäße Zusammensetzungen weisen einen Feststoffgehalt von 40 bis 60 Gew.-% auf, bei Viskosität von 5 bis 20 mPa s.

Weiter ist eine Zusammensetzung bevorzugt, wenn sie einen GesamtStickstoffgehalt von 0,1 bis 15 Gew.-%, insbesondere von 1,0 bis 4,0 Gew.-% bei einer Viskosität von 1 bis 100 mPa s aufweist, besonders bevorzugt 5 bis 20 mPa s, und gegebenenfalls einem pH-Wert im Bereich von 5,0 bis 11,0, bevorzugt von 6,0 bis 9,0.

Eine Zusammensetzung kann weiter bevorzugt sein, wenn sie zusätzlich oder alternativ einen Gehalt an Wasser von 0,0999 bis 99,9 Gew.-% und einen Gehalt an flüchtigem Lösemittel bzw. Hydrolysealkohol in der Gesamtzusammensetzung von unter 12 Gew.-% bis 0 Gew.-% aufweist, vorzugsweise unter 1 bis 0,0001 Gew.-%, wobei alle Bestandteile in der Zusammensetzung in Summe 100 Gew.-% ergeben. Ferner kann es bevorzugt sein, wenn eine Zusammensetzung mindestens eine weitere der folgenden Komponenten aus der Reihe Pigmente, Füllstoffe, Binder, Vernetzer, optische Aufheller, Lackhilfsstoffe oder andere Hilfsstoffe enthält.

Erfindungsgemäß ist die vorliegende Zusammensetzung im Wesentlichen frei von flüchtigen Lösemitteln, bevorzugt von Hydrolysealkohol, und setzt insbesondere beim Vernetzen keinen Hydrolysealkohol mehr frei, und insbesondere weist sie einen Flammpunkt oberhalb 90 °C auf.

Die beanspruchten Zusammensetzungen sind im Wesentlichen lagerstabil. Das bedeutet, sie zeigen keine sichtbaren Veränderungen wie Trübung oder Sedimentation oder Gelierung innerhalb von zwei Wochen, bevorzugt 3 Monaten besonders bevorzugt 1 Jahr.

Vor der Anwendung können die erfindungsgemäßen Zusammensetzungen sowie die erfindungsgemäßen Endprodukte bei Bedarf vorteilhaft auf einen Gehalt zwischen 10 bis 0,01 Gew.-%, bevorzugt auf 5 bis 0,1 Gew.-% mit Wasser oder anderen Lösemitteln oder auch Gemischen daraus verdünnt werden.

Gegenstand der Erfindung ist auch eine Formulierung umfassend eine erfindungsgemäße Zusammensetzung, insbesondere wässrigen Zusammensetzung, die darüber hinaus mindestens eine der folgenden Komponenten aus der Reihe Pigmente, Binder, Vernetzer, optische Aufheller, Lackhilfsstoffe, Wirkstoff und/oder Hilfsstoff und/oder Füllstoff umfasst.

Die erfindungsgemäßen Zusammensetzungen können mit sehr guter Eignung in Inkjet-Beschichtungen, insbesondere für hochglänzende Papierstriche eingesetzt werden.

Ebenfalls Gegenstand der Erfindung ist die Verwendung der quartären-aminoalkoholfunktionellen, siliciumorganischen Verbindung oder einer Zusammensetzung, insbesondere nach einem der Ansprüche 1 bis 20, zur Modifizierung, Behandlung und/oder Herstellung von Formulierungen, Substraten, Artikeln, organischen oder anorganischen Materialien, Kompositmaterialien, Papierstreichmassen, Inkjet-Anwendungen, bevorzugt zur Herstellung von Inkjet-Fotopapieren, Papierbeschichtungsmitteln, Papier, Textilien, Füllstoffen, biozid, fungizid und/oder viruzid wirkenden Formulierungen, biozid, fungizid und/oder viruzid wirkenden Beschichtungen, zur Ausrüstung von Fasermaterialien, Garnen und/oder Textilien, zur Textilimprägnierung, zur Antistatikausrüstung von Oberflächen, insbesondere flächiger, faseriger, gewebter, körniger und/oder pulverförmiger Materialien, somit insbesondere zur kationischen Modifizierung von anorganischen oder polaren organischen Oberflächen, beispielsweise Füllstoffen, Pigmenten, Glas-, Mineral- und keramischen Oberflächen, polaren Kunst- und Naturstoffen, wie beispielsweise Polyester, Polyamide, Wolle, Siede, Cellulose, Lignocellulose, Holz, Proteine, Zucker, Polysaccharide und dergleichen, die auch in partikulärer Form oder Faserform, im cm-, mm-, mikronisierten oder auch im Nanometer-Bereich vorliegen können.

Eine bevorzugte Anwendung für die erfindungsgemäßen Zusammensetzungen ist die Herstellung von Streichfarben. Hierzu wird geeigneterweise zunächst eine wässrige Silicadispersion hergestellt und mit dem erfindungsgemäßen Silansystem behandelt, gewöhnlich unter Einwirkung hoher Scherkräfte mit Hilfe branchenüblicher Dispergiergeräte. Für optimale Ergebnisse ist eine mittlere Aggregatgröße von 140-160 nm wünschenswert. Innerhalb eines Systems führen höhere Füllgrade während der Dispergierung zu einer Abnahme der mittleren Partikelgröße. Die erhaltene silanisierte Silicadispersion zeichnet sich vorteilhaft durch einen hohen Feststoffgehalt, hohe Lagerstabilität und niedrige Sedimentationsneigung aus. Bevorzugt wird in einem zweiten Schritt aus der silanisierten Silicadispersion durch Zusatz von Bindemittel, vorzugsweise Polyvinylalkohol, und Vernetzer, vorzugsweise Borsäure, die Streichfarbe hergestellt, die sich besonders gut zur Herstellung von Foto-Inkjet-Papieren eignet.

Je geringer der Feststoffgehalt in der Formulierung ist desto geringer ist auch die Kapazität der damit betriebenen Beschichtungsanlagen, weil die flüchtigen Bestandteile der Papierstreichmassen (hier: hauptsächlich Wasser) in der Regel thermisch entfernt werden müssen. Je höher der Feststoffgehalt der Formulierung desto weniger Wasser muss entfernt werden und desto schneller können die Beschichtungsanlagen betrieben werden. Ein Feststoffgehalt von > 20 Gew.-%, bevorzugt größer 24 Gew.-% wird unter den in Beispiel S4 gewählten Bedingungen für Papierstreichmassen angestrebt. Eine Beschreibung dieser Anwendung ist im Detail in der parallelen DE-Anmeldung mit dem Titel "Verfahren zur Herstellung einer Siliciumdioxidpartikel und Kationisierungsmittel aufweisenden Dispersion" zu entnehmen.

Zur Anwendung kann die erfindungsgemäße Zusammensetzung in der Regel durch Tauchen, Streichen, Verreiben, Sprühen, insbesondere mit Tröpfchengrößen unterhalb 200 $\mu$m, bevorzugt kleiner 100 $\mu$m bis in den Nanometerbereich; Niederschlagen, Spincoating, mittels Curtain Coater oder alle weiteren, dem Fachmann bekannte Techniken auf ein Substrat aufgebracht werden. Dazu wird eine für das angewendete Verfahren geeignete Konzentration an siliciumorganischer Verbindung in der Zusammensetzung eingestellt. Je nach Verarbeitungsverfahren kann daher die Konzentration von 0,01 Gew.-% an siliciumorganischer Verbindung bis hin zu 99,5 Gew.-% in der Zusammensetzung reichen. Die Auftragungsverfahren sind dem jeweils zuständigen Fachmann hinlänglich bekannt. Darüber hinaus kann in an sich bekannter Weise eine auf ein Substrat aufgebrachte Beschichtung unter Umgebungsbedingungen und/oder durch eine zusätzlich thermische und/oder photochemische Behandlung aushärten bzw. mit dem Substrat abbinden. Beispielsweise kann man so mit einer erfindungsgemäßen Zusammensetzung anorganische oder organische Substrate behandeln oder eine erfindungsgemäße Zusammensetzung als Eduktkomponente in Formulierungen einsetzen.

Die folgenden Beispiele erläutern die vorliegende Erfindung, insbesondere das erfindungsgemäße Verfahren sowie die erfindungsgemäßen Zusammensetzungen, näher, ohne die Erfindung auf diese Beispiele zu beschränken.

## Beispiele

Bestimmungsmethoden:

Hydrolysierbares Chlorid wurde potentiographisch mit Silbernitrat titriert (beispielsweise Metrohm, Typ 682 Silberstab als Indikatorelektrode und Ag/AgCl-Referenzelektrode oder andere geeignete Referenzelektrode). Gesamtchloridgehalt nach dem Wurtzschmitt-Aufschluss. Dazu wird die Probe in einer Wurtzschmittbombe mit Natriumperoxid aufgeschlossen. Nach Ansäuern mit Salpetersäure wird Chlorid potentiographisch mit Silbernitrat gemessen, wie vorstehend.

Bei einer vollständigen Umsetzung der Chloralkylfunktion mit tertiären Aminen sind die Analysenwerte für hydrolysierbares Chlorid und Gesamtchlorid identisch und damit ein Maß für die Vollständigkeit der Reaktion, da mit Gesamtchlorid die Summe aus salzartigem Chlorid (Aminhydrochlorid) und kovalent gebundenem Chlor (Chloralkylfunktion) und mit hydrolysierbarem Chlorid ausschließlich salzartiges oder mit Wasser abspaltbares Chlorid (vorliegend Aminhydrochlorid) bestimmt wird. Am Anfang der Reaktion beträgt der Wert für hydrolysierbares Chlorid null und steigt bei vollständigem Umsatz auf den Wert, der für Gesamtchlorid gemessen wird. Daher eignet sich diese Analysen hervorragend zusätzlich zur $^{1}H$ und $^{13}C$ NMR Spektroskopie als Reaktionskontrolle.

Der Alkoholgehalt nach Hydrolyse wird gaschromatographisch bestimmt. Dazu wird eine Probe einer definierten Menge mit Schwefelsäure (5 g Probe, 25 ml $H_2SO_4$, w = 20 %) hydrolysiert. Es werden 75 ml destilliertes Wasser zugegeben. Anschließend mit Natronlauge neutralisiert und eine Wasserdampfdestillation durchgeführt. Interner Standard 2-Butanol.

Die Stickstoffbestimmung, organisch gebunden, Ammonium etc. organisch gebundener Stickstoff kann mittels Kjeldahl-Aufschluss in Ammonium überführt werden und nach Zusatz von Natronlauge als Ammoniak acidimetrisch bestimmt werden. Verfahren: Bis zu 5 g Probe werden mit 10 ml Schwefelsäure (konz.) und einer Kjeldahl-Tablette (Merck 1.15348) erhitzt, bis die Aufschlusslösung hell und abgesehen von eventuell ausgefallener Kieselsäure klar ist. Das Aufschlussgefäß wird an die Destillationsapparatur angeschlossen und durch Natronlauge-Zugabe (27 %) freigesetztes Ammoniak in die Vorlage überdestilliert. Der Ammoniakgehalt wird unter Borsäurezusatz (2 %) mit Schwefelsäure ($c(H_2SO_4)$=0,05 mol/l bzw. 0,005 mol/l) titriert. V = Verbrauch an Schwefelsäure in ml, c = Konzentration der Schwefelsäure in mol/l, z = Äquivalentzahl der Schwefelsäure = 2, E = Einwaage in mg

Auswertung:

$$N\,[\%] = \frac{100 \cdot V \cdot c \cdot z \cdot 14{,}01}{E}$$

Bestimmung von $SiO_2$ erfolgt nach Zersetzung mittels Schwefelsäure und Kjeldahl-Katalysator, indem das Gewicht des ausgeschiedenen $SiO_2$ bestimmt wird. Verfahren: Die 1 g Probe wird in einem 250 ml Becherglas mit einer Kjeldahl-Tablette (z.B. Merck Nr. 15348) und 20 ml Schwefelsäure (konz.) versetzt. Die Lösung wird langsam erhitzt. Die organischen Bestandteile werden oxidiert, bis die Aufschlusslösung beim Rauchen der Schwefelsäure klar und hell bleibt. Nach Abkühlen und vorsichtigem Verdünnen auf ca. 200 ml wird die dabei ausgefällte Kieselsäure durch ein Weißbandfilter abfiltriert. Das Filter wird mit Wasser gewaschen, bis der pH-Wert des Waschwassers > 4 ist, dann im Platintiegel getrocknet und verascht. Der Rückstand wird bei 800 °C geglüht und ausgewogen. Nach Abrauchen mit Flusssäure (konz.) wird erneut bei 800 °C geglüht und ausgewogen. m = Gewichtsdifferenz vor und nach Abfluorieren in g; E = Einwaage in g

Auswertung:

$$SiO_2\,[\%] = \frac{100 \cdot m}{E}$$

Nachfolgend die DIN-Normen, die zur Ermittlung der genannten Parameter, angewendet wurden, wiedergegeben:

| | |
|---|---|
| Feststoffgehalt: | DIN 38409-1 (1987-01-00) |
| Brechzahl: | DIN 51423 (2010-02-00) |
| Dichte: | DIN 51757 (1994-04-00) |
| Viskosität | DIN 53015 (2001-02-00) |
| Farbzahl | DIN EN ISO 6271 (2005-03-00) |
| Trübung | DIN EN ISO 7027 (2000-04-00) |

**Beispiel 1**

**3-Chlorpropyltriethoxysilan (CPTEO) / N,N- Dimethylethanolamin**

**Apparatur:**

4-l-Rührreaktor mit Destilliervorrichtung, Sumpf- und Kopfthermometer, Vakuumpumpe, Manometer Dosiervorrichtung und Druckfilter

**Stoffeinsatz**

| Edukte | m(Edukt) [g] | n(Edukte) [mol] | w(Edukte) [%] | Bemerkung |
|---|---|---|---|---|
| CPTEO | 1283,0 | 5,328 | 28,79 | M = 240,8 g/mol, Kp = 230 °C |
| N,N-Dimethylethanolamin | 570,5 | 6,400 | 12,80 | M = 116,21 g/mol<br>Kp = 133 °C |
| Ethanol | 160,0 | | 3,59 | |
| VE-Wasser: | | | | |
| 1. Zugabe | 143,9 | 7,992 | 3,23 | |
| 2. Zugabe | 143,9 | | 3,23 | |
| 3. Zugabe | 143,9 | | 3,23 | |
| 4. Zugabe | 144,5 | | 3,24 | |
| 5.-12.Zugabe | 1866,1 | | 41,88 | |
| Σ (Edukte) | 4455,8 | | 100,00 | |
| m(Ethanol aus Hydrolyse) = 735,3g | | | | |

**Auswaage Produkt:** 2438,5 g (Theorie: 2562,7 g)

**Auswaage Destillat:** 2236,0 g

**Durchführung:**

1. Hydrolyse

In einem 4-l-Vierhalskolben wurden 1283,0 g CPTEO (5,328 mol) und 160,0 g Ethanol vorgelegt. Bei RT wurden 143,9 g VE-Wasser (1,5mol H2O / mol Si) innerhalb von 16 min zugetropft. Die Sumpftemperatur stieg dabei auf ca. 40 °C an.

2. Quartärnierungsreaktion

Anschließend wurden 570,5 g (6,400 mol) Dimethylethanolamin innerhalb von 6 min zugerührt. Die Sumpftemperatur stieg dabei von 40 °C auf ca. 48 °C an. Anschließend wurde ca. 45 min auf Rückfluss gekocht (Sumpftemperatur ca. 85 °C).

3. Destillation bei RT / Quaternierungsreaktion

Bei Normaldruck wurden innerhalb von ca. 6 h 1706,6 g Wasser / Ethanol / Dimethylethanoldiamin abdestilliert. Während dieser Zeit wurden in sieben Portionen 2038,3 g Wasser zugerührt. Nach ca. 3 h Destillation wurden in 3 Portionen (2. bis 4. Wasserzugabe) insgesamt 432,4 g VE-Wasser eingebracht. Die Sumpfprobe zeigte nun eine gute Löslichkeit in VE-Wasser.

3. Destillation unter Vakuum

Innerhalb von 1,7 h wurden bei einer Sumpftemperatur von 50 bis 55 °C und einem Absolutdruck von ca. 140

mbar 529,4 g Wasser / Ethanol / Dimethylethanoldiamin Gemisch abdestilliert. Am Ende der Destillation wurden 560,17 g VE-Wasser zugerührt. Erhalten wurde eine leicht trübe / leicht gelbliche, niedrigviskose Flüssigkeit. Ausbeute: 2521,7 g

4. Filtration

Es wurde im 2-l-Labordruckfilter bei RT bei einem Überdruck von ca.0,5 bar N2 filtriert. Als Filter wurde eine zugeschnittene Filterplatte (Technikum, für Glockenfilter eingesetzt) mit einem Durchmesser von 135 mm verwendet. Die Filtrationszeit betrug ca. 20 min. Erhalten wurde eine klare leicht gelbliche, niedrigviskose Flüssigkeit.

**Analytik (Produkt):**

| Bestimmung | Einheit | Ergebnis | Methode |
|---|---|---|---|
| Gesamt-N | Gew.-% | 2,9 | s. o. |
| Gesamtchlorid | Gew.-% | 7,4 | s. o. |
| Hydrolysierbares Chlorid | Gew.-% | 7,0 | s. o. |
| $SiO_2$ | Gew.-% | 12,5 | s. o. |
| Feststoffgehalt | Gew.-% | 47,5 | DIN 38409-H1-1 |
| Ethanol (nach Hydrolyse) | Gew.-% | <0,1 | s. o. |
| pH-Wert | | 8,6 | |
| Brechzahl (20 °C) | | 1,4146 | DIN 51423 |
| Dichte (20 °C) | $g/cm^3$ | 1,126 | DIN 51757 |
| Viskosität (20 °C) | mPa s | 12,3 | DIN 53015 |
| Flammpunkt | °C | >95 | DIN EN ISO 2719 |
| Farbzahl | mg Pt-Co/l | 55 | ISO 6271 |
| Trübung | TE/F | 0,36 | ISO 7027 |

$^1H$ und $^{13}C$-NMR:

Reinheit der Zielverbindung ca. 95,8 mol-%. 4,2 mol-% freies Dimethylethanolamin. Keine Hinweise auf eine Umesterung der Aminoethanolgruppe zu SiOR.

$^{29}Si$-NMR:

1% Si Silan
7% Si M-
45%Si D-
47% Si T-Strukturen

Das neue Produkt zeichnet sich durch noch bessere Verarbeitungs- bzw. Anwendungseigenschaften bei der Herstellung von hochglänzenden Inkjet-Fotopapieren aus.

Anmerkungen zur Umsetzung von N,N Dimethylethanolamin mit CPTEO Unterschiede im Verfahren zur Umsetzung von Halogenalkylalkoxysilanen mit tertiären Aminen, wie in PCT/EP2010/053626.

- Wie in Bsp. 5 aufgeführt, erweist es sich als vorteilhaft, wenn vor der Umsetzung von CPTEO mit N,N-Dimethylethanolamin das CPTEO vorhydrolysiert wird und der freigesetzte Hydrolysealkohol abdestilliert wird.
- Erfolgt keine Vorhydrolyse von CPTEO vor Umsetzung mit N,N-Dimethylethanolamin, so erweist es sich als vorteilhaft, mit einem Überschuss an N,N-Dimehtylethanolamin zu arbeiten, um erhebliche Ausfällungen von CPTEO zu vermeiden (siehe Beispiel 3). Wenn erforderlich, kann überschüssiges N, N-Dimethylethanolamin destillativ abgetrennt werden.

- Nicht vollständig umgesetztes CPTEO mit N,N- Dimehtylethanolamin kann prinzipiell durch Wasserzugabe ausgefällt werden (siehe Beispiel 2).

- Wird die Umsetzung CPTEO mit N,N-Dimethylethanolamin bei Temperaturen von 140 bis 150°C durchgeführt, so führt das zu intensiven Verfärbungen des Produkts (siehe Beispiel 4 ).

**Beispiel 2**

In einem 500-ml-Vierhalskolben wurden 160,01 g Dynasylan® CPTEO (0,664 mol) vorgelegt. Bei RT wurden 20,73 g Ethanol zugerührt und anschließend innerhalb von 13 min 18,09 g VE-Wasser (1,5 mol $H_2O$ / mol Si) unter Rühren zugetropft. Dabei stieg die Sumpftemperatur von 20 °C auf 33 °C an. Anschließend wurden innerhalb von zwei Minuten 59,34 g N,N-Dimetylethanolamin (0,665 mol) zugerührt, was zu einer Erhöhung der Sumpftemperatur auf 42 °C führte. Anschließend wurde 1 h bei ca. 87 °C Sumpftemperatur unter Rückfluss gekocht. Danach wurde bei Normaldruck Ethanolgemisch abdestilliert. Die Sumpftemperatur erreichte während der Destillation eine Höchsttemperatur von 107 °C. 46 min nach Destillationsbeginn wurden 36,08 g VE-Wasser innerhalb von drei Minuten zudosiert. Weitere 184,88 g VE-Wasser wurden während der weiteren Destillation zugegeben. Es wurden insgesamt 184,5 g Flüssigkeit abdestilliert. Nach insgesamt 7,5 h wurde der Ansatz auf RT abgekühlt. Die Ausbeute betrug 266,07 g (entspricht 90,3 % der Theorie) klare niedrigviskose, leicht gelbliche Flüssigkeit. Am Rührer hatten sich deutliche Mengen einer Gelartigen Substanz (kondensiertes Silanhydrolysat) abgelagert, was verantwortlich für die relativ niedrige Ausbeute (verminderte Ausbeute durch Gelablagerungen) war.

**Analytik:**

| **Bestimmung** | **Einheit** | **Ergebnis** | **Methode** |
|---|---|---|---|
| Gesamt-N | Gew.-% | 3,0 | s. o. |
| Gesamtchlorid | Gew.-% | 7,7 | s. o. |
| Hydrolysierbares Chlorid | Gew.-% | 7,6 | s. o. |
| Feststoffgehalt | Gew.-% | 51,5 | DIN 38409-H1-1 |
| Ethanol (nach Hydrolyse) | Gew.-% | 0,1 | s. o. |
| pH-Wert | | 7,5 | |
| Brechzahl (20 °C) | | 1,4180 | DIN 51423 |
| Dichte (20 °C) | $g/cm^3$ | 1,132 | DIN 51757 |
| Viskosität (20 °C) | mPa s | 14,2 | DIN 53015 |
| Farbzahl | mg Pt-Co/l | 30 | ISO 6271 |
| Trübung | TE/F | 0,23 | ISO 7027 |

$^1$H und $^{13}$C-NMR: 98,2 mo-l% Reinheit der quaternären Zielverbindung, ca. 1,8 mol-% freies Dimethylethanolamin

$^{29}$ Si-NMR:

1% Si Silan 7% Si M-
47% Si D-
45% Si T-Strukturen

**Beispiel 3**

20 mol-% DMEA Überschuss, keine Gelablagerungen

In einem 500-ml-Vierhalskolben wurden 160,55 g Dynasylan® CPTEO (0,667 mol) vorgelegt. Bei RT wurden 20,12 g Ethanol zugerührt und anschließend innerhalb von 13 min 18,05 g VE-Wasser (1,5 mol $H_2O$ / mol Si) unter Rühren zugetropft. Dabei stieg die Sumpftemperatur von 21 °C auf 28 °C an. 33,1 g Hydrolyseethanol wurden unter Vakuum (140 bis 94 mbar Absolutdruck) bei einer Sumpftemperatur von ca. 35 °C innerhalb von 45 min abdestilliert. Anschließend wurden innerhalb von vier Minuten 71,34 g N,N-Dimetylethanolamin (0,800 mol) zugerührt, was zu einer Erhöhung der Sumpftemperatur auf 35 °C führte. Danach wurden bei Normaldruck innerhalb von 38 min 80,08 g Ethanolgemisch abdestilliert. Bei einer Sumpftemperatur von 96,0 bis 92,2 °C wurde 20 min unter Rückfluss gekocht. Anschließend wurden 17,99 g VE-Wasser innerhalb von zwei Minuten zudosiert. Weitere 245,47 g VE-Wasser wurden

während der weiteren Destillation zugegeben.

Es wurden insgesamt 232,5 g Flüssigkeit abdestilliert. Nach insgesamt 7,65 h wurde der Ansatz auf RT abgekühlt. Die Ausbeute betrug 325,9 g (entspricht 96,0 % der Theorie) klare niedrigviskose, leicht gelbliche Flüssigkeit. Keine Gelablagerungen im Reaktionsgefäß.

**Analytik:**

| Bestimmung | Einheit | Ergebnis | Methode |
|---|---|---|---|
| Gesamt-N | Gew.-% | 2,7 | s. o. |
| Gesamtchlorid | Gew.-% | 7,2 | s. o. |
| Hydrolysierbares Chlorid | Gew.-% | 7,0 | s. o. |
| Feststoffgehalt | Gew.-% | 47,2 | DIN 38409-H1-1 |
| Ethanol (nach Hydrolyse) | Gew.-% | <0,1 | s. o. |
| pH-Wert | | 8,0 | |
| Brechzahl (20 °C) | | 1,4121 | DIN 51423 |
| Dichte (20 °C) | g/cm3 | 1,122 | DIN 51757 |
| Viskosität (20 °C) | mPa s | 10,9 | DIN 53015 |
| Farbzahl | mg Pt-Co/l | 25 | ISO 6271 |
| Trübung | TE/F | 1,0 | ISO 7027 |

$^{1}$H und'$^{3}$C-NMR: 97,3 mol-% Reinheit der quaternären Zielverbindung, ca. 2,7 mol-% freies Dimethylethanolamin

$^{29}$Si-NMR:

-% Si Silan
6% Si M-
47% Si D-
47% Si T-Strukturen

**Beispiel 4**

CPTEO / N,N-Dimethylethanolamin (DMAE) Umsetzung bei 140 bis 150 °C

In einem 500-ml-Vierhalskolben wurden 160,10 g CPTEO (0,665 mol) vorgelegt. Bei 20 °C Sumpftemperatur wurden 59,35 g N,N-Dimethylethanolamin (0,666 mol) zugerührt. Bei einer Sumpftemperatur von 140,6 bis 151,8 °C wurde 6,8 h gerührt. Nach ca. 2,5 h Reaktionszeit ergab die GC-Analyse noch 14,0 Fl.-% CPTEO und <0,1 Fl.-% N,N-Dimethylethanolamin im Sumpf. Der Sumpf hatte sich inzwischen von leicht gelblich über orange nach rot verfärbt. Nach 3,7 h Reaktionszeit ergab die GC-Analyse der Sumpfprobe einen Gehalt von 16,8 Fl.-% CPTEO. Daraufhin wurden 13,98 g N,N-Dimethylethanolamin (0,157 mol) zudosiert. Der Sumpf verfärbte sich braun. Nach weiteren 22 min Reaktionszeit ergab die GC-Analyse vom Sumpf noch 7,4 Fl.-% CPTEO. Es wurden nochmals 13,99 g N,N-Dimethylethanolamin (0,157 mol) zudosiert. Nach weiteren 13 min Reaktionszeit ergab die GC-Analyse noch 3,2 Fl.-% CPTEO im Sumpf. Es wurden nun innerhalb 31 min 127,55 g VE-Wasser zudosiert. Nach insgesamt 8 h wurde der Ansatz auf RT gekühlt. Der Sumpf war nahezu klar und braun. Am nächsten Tag wurde unter Vakuum (300 mbar bis 176 mbar Absolutdruck) und einer Sumpftemperatur von 61,1 bis 76,9 °C freies Ethanol abdestilliert. Insgesamt wurden in ca. 4 h 230,28 g Flüssigkeit abdestilliert. Während der Destillation wurden 223,8 g VE-Wasser zudosiert. Die Ausbeute betrug 348,19 g (entspricht 95,4% der Theorie) klare braune, niedrigviskose Flüssigkeit. Keine Gelablagerungen im Reaktionsgefäß.

**Analytik:**

| Bestimmung | Einheit | Ergebnis | Methode |
|---|---|---|---|
| Gesamt-N | Gew.-% | 3,1 | s. o. |
| Gesamtchlorid | Gew.-% | 6,6 | s. o. |

(fortgesetzt)

| Bestimmung | Einheit | Ergebnis | Methode |
|---|---|---|---|
| Hydrolysierbares Chlorid | Gew.-% | 6,3 | s. o. |
| Feststoffgehalt | Gew.-% | 45,7 | DIN 38409-H1-1 |
| Ethanol (nach Hydrolyse) | Gew.-% | <0,1 | s. o. |
| pH-Wert | | 9,5 | |
| Brechzahl (20 °C) | | 1,1429 | DIN 51423 |
| Dichte (20 °C) | $g/cm^3$ | 1,145 | DIN 51757 |
| Viskosität (20 °C) | mPa s | 11,1 | DIN 53015 |
| Farbzahl | Gardner | 8 | ISO 6271 |
| Trübung | TE/F | 1,6 | ISO 7027 |

**Beispiel 5**

CPTEO / DMAE 1:1 (Mol), CPTEO mit 1,5 mol $H_2O$/ mol Si vorhydrolysiert

In einem 4-l-Dreihalskolben wurden 829,30 g CPTEO (3,444 mol) vorgelegt und 100,40 g Ethanol bei 22 °C Sumpftemperatur zugerührt. Anschließend wurden bei Raumtemperatur und intensivem Rühren innerhalb von 8 min 93,12 g VE-Wasser zudosiert. Dabei stieg die Sumpftemperatur auf 47 °C an. Unter Vakuum wurde dann der Hydrolyseethanol bis zu einer Sumpftemperatur von 62,2 °C und einem Absolutdruck <1 mbar abdestilliert. Anschließend wurden 307,12 g (3,445 mol) N,N-Dimethylethanolamin zugerührt. Dabei stieg die Sumpftemperatur bis max. auf 58,5 °C an. Der Sumpf wurde anschließend auf 109,4 °C erwärmt, und vorsichtig wurden innerhalb von 11 min 93,05 g Wasser zudosiert. Nach 12 min erfolgte wieder eine Wasserzugabe (92,75 g in 6 min). Es wurde begonnen, Ethanol bei Normaldruck abzudestillieren. Anschließend wurde nochmals VE-Wasser in zwei Portionen (92,99 g und 93,01 g) zudosiert, bevor dann unter Vakuum restliches freies Ethanol abdestilliert wurde. Während der Vakuumdestillation und nach Destillationsende wurden insgesamt nochmals 956,36 g VE-Wasser in das Reaktionsgemisch zugerührt. Erhalten wurden 1773,2 g (97,.0 %) leicht trübe / gelbliche, niedrigviskose Flüssigkeit.

**Analytik:**

| Bestimmung | Einheit | Ergebnis | Methode |
|---|---|---|---|
| Gesamt-N | Gew.-% | 2,6 | s. o. |
| Gesamtchlorid | Gew.-% | 6,8 | s. o. |
| Hydrolysierbares Chlorid | Gew.-% | 6,5 | s. o. |
| Feststoffgehalt | Gew.-% | 43,9 | DIN 38409-H1-1 |
| Ethanol (nach | Gew.-% | <0,1 | s. o. |
| Hydrolyse) | | | |
| pH-Wert | | 6,3 | |
| Brechzahl (20 °C) | | 1,4059 | DIN 51423 |
| Dichte (20 °C) | $g/cm^3$ | 1,115 | DIN 51757 |
| Viskosität (20 °C) | mPa s | 8,7 | DIN 53015 |
| Farbzahl | mgPt-Co/l | 60 | ISO 6271 |
| Trübung | TE/F | 2,7 | ISO 7027 |

**Vergleichsbeispiel für die Herstellung von Dispersionen:**

Quartäres Silansystem (CPTEO/TMEDA), hergestellt aus 3-Chlorpropyltriethoxysilan (CPTEO) und Tetramethylethylendiamin (TMEDA).

**Vergleichsbeispiel 1:**

Wasserbasierte, VOC-freie Lösung eines quartären Silansystems, hergestellt aus 3-Chlorpropyltriethoxysilan (CPTEO) und Tetramethylethylendiamin (TMEDA).

Apparatur: Rührreaktor mit Destilliervorrichtung, Sumpf- und Kopfthermometer, Vakuumpumpe, Manometer und Dosiervorrichtung

**Stoffeinsatz:**

| Edukte | M(Edukt) [g] | N(Edukte) [mol] | w(Edukte) [%] | Bemerkung |
|---|---|---|---|---|
| Chlorpropyltriethoxysilan | 3206,2 | 13,31 | 37,3 | M = 240,8 g/mol |
| N,N,N,'N'-Tetramethylethylendiamin | 1547,2 | 13,31 | 18,0 | M = 116,21g/mol |
| VE-Wasser: | | | | |
| 1. Zugabe | 1603,1 | | 18,6 | |
| 2. Zugabe | 641,3 | | 7,5 | |
| 3. Zugabe | 1600,0 | | 18,6 | |
| Σ (Edukte) | 8597,8 | | | |

m(Ethanol aus Hydrolyse) = 1836,8 g; Auswaage Produkt nach Filtration: 6521,4 g (Theorie: 6761,1 g); Auswaage Destillat: 2946,5 g

Durchführung:

1. Reaktion (Dauer ca. 9,7 h): Chlorpropyltriethoxysilan wurde vorgelegt und unter Rühren Tetramethylethylendiamin schnell zugegeben. Anschließend erfolgte die 1. Zugabe von Wasser innerhalb von circa 20 Minuten (Volumenstrom ca. 4,8 l/h) unter kräftigem Rühren. Der Sumpf war nun deutlich trüb, es wurde 6 h unter Rückfluss (ca. 87 °C) erhitzt. Innerhalb von 10 Minuten erfolgte die 2. Wasserzugabe in den inzwischen aufgeklarten Sumpf (Volumenstrom ca. 3,9 l/h). Nach weiteren 1,5 h Erhitzen unter Rückfluss erfolgte die 3. Zugabe von Wasser unter Rühren (innerhalb von ca. 20 Minuten, Volumenstrom ca. 4,8 l/h).
2. Destillation (Dauer ca. 9 h): Bei einer Sumpftemperatur von 49 °C bis 54 °C wurde Hydrolyseethanol unter Vakuum (100 - 270 mbar) abdestilliert. Nach Abdestillieren eines ca. 1700 g Ethanol/Wasser-Gemisches wurden 327 g Wasser schnell nachdosiert. Um den Hydrolysealkohol nahezu vollständig abzudestillieren, musste ein mindestens 60-%iger Überschuss (bezogen auf die Masse an Hydrolysethanol) abdestilliert werden. Die abdestillierte Wassermenge wurde am Ende der Destillation wieder zugeführt.
3. Filtration (Dauer ca. 1 h): Anschließend wurde das gelbliche, leicht trübe Produkt mittels Druckfilter (2 l) und Seitz 500 Tiefenfilter bei 0,8 bar Überdruck filtriert (Filtrationsleistung bei $d_{Filter}$= 14cm: 18 l/h). Erhalten wurde eine klare, leicht gelbliche Flüssigkeit.

**Analysen:**

| Bestimmung | Ergebnis | Theorie | Methode |
|---|---|---|---|
| Viskosität (20 °C) [mPa s] | 70 | | DIN 53015 |
| Dichte (20 °C) [g/ml] | 1,107 | | DIN 51757 |
| Brechzahl (20 °C) | 1,4224 | | DIN 51423 |
| Farbe [mg Pt-Co/l] | 75 | | |
| Feststoff [%] | 48,4 | | DIN 38409-1 |
| pH | 8,6 | | 1:1 in Wasser, DIN 38404-C5 |

(fortgesetzt)

| Bestimmung | Ergebnis | Theorie | Methode |
|---|---|---|---|
| $SiO_2$ [%] | 11,8 | 11,8 | s. o. |
| Ethanol n. Hydrolyse [%] | 0,5 | | s. o. |
| Gesamt-N [%] | 5,0 | 5,5 | s. o. |
| Gesamtchlorid [%] | 7,2 | 7,0 | s. o. |
| Hydrol. Chlorid [%] | 7,1 | 7,0 | s. o. |

NMR: $^{13}$C-NMR: Ca. 15 % der TMEDA-Gruppen lagen als Bisaddukt vor. Pro 100 $SiCH_2$-Gruppen lagen 8 Mol-% freies TMEDA vor.

$^{29}$Si-NMR: 2,5 Si-% Silan; 14,6 Si-% M-Strukturen; 49,7 Si-% D-Strukturen; 33,3 Si-% T-Strukturen

**Herstellung von Dispersionen**

Die nachfolgenden Dispersionsbeispiele D1 bis D4 wurden unter der Maßgabe entwickelt, dass die Dispersionen dünnflüssig anwendbar und ähnliche Performance in der Papierbeschichtung hinsichtlich Porenstruktur und Porenvolumen aufweisen. Als Maß für die Porosität der Beschichtung hatte sich die mittlere Aggregatgröße in der Dispersion, gemessen mit dynamischer Lichtstreuung, herausgestellt. Für optimale Ergebnisse war eine mittlere Aggregatgröße von 140 bis 160 nm wünschenswert. Innerhalb eines Systems führten höhere Füllgrade während der Dispergierung zu einer Abnahme der mittleren Partikelgröße. Die Beispiele zeigen, dass durch die Verwendung des erfindungsgemäßen Silansystems sehr hohe Füllgrade bei gleichzeitiger Beibehaltung der gewünschten Aggregatgröße machbar sind.

**Beispiel D1:**

Dispersion ausgehend von Flammkieselsäure mit einer spezifischen Oberfläche von 300 m2/g und Poly-Diallyl-Dimethyl-Ammoniumchlorid (p-DADMAC)

(Vergleichsbeispiel)

Zu 1350 g VE-Wasser wurden 60g p-DADMAC gegeben. Dann wurden 320 g Flammkieselsäure mittels eines Dissolvers bei 1500 bis 4000 U/min eingerührt und anschließend über einen Zeitraum von fünf Minuten bei 2000 U/min weiter vordispergiert. Nachfolgend wurde nun mit einem Rotor-Stator-Dispergiergerät bei 15000 U/min unter Kühlung (<30°C) zehn Minuten dispergiert.
Abschließend wurde die Dispersion über ein 500 μm Sieb filtriert.

**Beispiel D2:**

Dispersion ausgehend von Flammkieselsäure mit einer spezifischen Oberfläche von 300 m2/g und N-Butylaminopropyltrimethoxysilan

(Vergleichsbeispiel)

Zu 1200 g VE-Wasser wurden 425 g Flammkieselsäure mittels eines Dissolvers bei 1500 bis 4000 U/min eingerührt und anschließend über einen Zeitraum von fünf Minuten bei 2000 U/min weiter vordispergiert. Nachfolgend wurde nun mit einem Rotor-Stator-Dispergiergerät bei 15000 U/min unter Kühlung (<30 °C) zehn Minuten dispergiert. Nun wurde erneut mit dem Dissolver mit 2000 U/min gerührt und es erfolgte die Zugabe einer Mischung aus 21,3 g N-Butylaminopropyl-trimethoxysilan, 67 g Methanol und 20 g Ameisensäure (50-prozentige Lösung in Wasser), danach wurde 60 Minuten im Rotor-Stator-System bei 5000 U/min bei 60 °C enddispergiert. Abschließend wurde die Dispersion abgekühlt und über ein 500-μm-Sieb filtriert.

**Beispiel D3:**

Dispersion ausgehend von Flammkieselsäure mit einer spezifischen Oberfläche von 300 m2/g und quartäres Silansystem (CPTEO/TMEDA), (Vergleichsbeispiel)

509 g Flammkieselsäure wurden mit einem Dissolver bei 1500 bis 5000 U/min in eine Mischung aus 1215 g VE-Wasser, 53,0 g quartäres Silansystem (CPTEO/TMEDA-System aus Vergleichsbeispiel 1), und 23,4 g Essigsäure (25-gewichtsprozentige Lösung in Wasser) eingerührt und 5 Minuten bei 2000 U/min weiterdispergiert. Anschließend wurdq mit einem Rotor-Stator-Dispergiergerät (Kinematica Polytron PT6100) über einen Zeitraum von 30 Minuten bei 10000 U/min enddispergiert. Abschließend wurde die Dispersion abgekühlt und über ein 500-μm-Sieb filtriert.

**Beispiel D4:**

Erfindungsgemäße Dispersion ausgehend von Flammkieselsäure mit einer spezifischen Oberfläche von 300 m2/g und der Lösung aus Beispiel 1 428 g Flammkieselsäure wurden mit einem Dissolver bei 1500 bis 5000 U/min in eine Mischung aus 805 g VE-Wasser und 47,4 g der Lösung aus Beispiel 1 eingerührt und 10 Minuten bei 2000 U/min weiterdispergiert. Anschließend wurde mit einem Rotor-Stator-Dispergiergerät (Kinematica Polytron PT6100) über einen Zeitraum von 30 Minuten bei 10000 U/min dispergiert. Abschließend wurde die Dispersion über ein 500-μm-Sieb filtriert.

**Tabelle:**

| **Physikalisch-chemische Daten der Dispersionen D1 bis D4** | | | | | |
|---|---|---|---|---|---|
| | | Vergleich | | | gemäß Erfindung |
| | | **D1** | **D2** | **D3** | **D4** |
| Feststoffgehalt*) | Gew.-% | 20,0 | 25,0 | 30,0 | 35,0 |
| Teilchendurchme sser **) | nm | 157 | 154 | 156 | 148 |
| Viskosität***) | mPa s | 47 | 80 | 122 | 142 |
| *) nach Trocknen bis zur Gewichtskonstanz bei 125 °C;<br>**) nach dyn. Lichtstreuung (Horiba LB-500);<br>***) bei 1000 1/s; 23 °C; | | | | | |

Die Dispersionsbeispiele D5 bis D8 zeigten unabhängig vom Parameter Aggregatgröße welcher Feststoffgehalt maximal mit dem jeweiligen Kationisierungsadditiv möglich ist. Die Dispersionen wiesen erwartungsgemäß sehr hohe Viskositäten auf, waren aber noch flüssig und verarbeitbar. Wegen der kleinen Teilchengrößen wurde auf die weitere Verarbeitung zu Streichfarben und Ink-Jet Papieren verzichtet.

**Beispiel D5:**

Dispersion ausgehend von Flammkieselsäure mit einer spezifischen Oberfläche von 300 m2/g und Poly-Diallyl-Dimethyl-Ammoniumchlorid (p-DADMAC)

(Vergleichsbeispiel)

Zu 1190 g VE-Wasser wurden 60 g p-DADMAC gegeben. Dann wurden 320 g Flammkieselsäure mittels eines Dissolvers bei 1500 bis 4000 U/min eingerührt und anschließend über einen Zeitraum von fünf Minuten bei 2000 U/min weiter vordispergiert. Nachfolgend wurde nun mit einem Rotor-Stator-Dispergiergerät bei 15000 U/min unter Kühlung (<30 °C) zehn Minuten dispergiert. Abschließend wurde die Dispersion über ein 500-μm-Sieb filtriert.

**Beispiel D6:**

Dispersion ausgehend von Flammkieselsäure mit einer spezifischen Oberfläche von 300 m2/g und N-Butylaminopropyltrimethoxysilan

(Vergleichsbeispiel)

Es wurden 1035 g Wasser vorgelegt und 21,2 g N-Butylaminopropyltrimethoxysilan ins Wasser gerührt. Nach 30 min Hydrolysezeit wurde die vorgelegte Lösung mit 63,7 g Essigsäure (25-gewichtsprozentige Lösung in Wasser) auf pH 4,2 eingestellt. Nun wurden 423,9 g Flammkieselsäure mittels eines Dissolvers bei 1500 bis 4000 U/min eingerührt und anschließend über einen Zeitraum von fünf Minuten bei 2000 U/min weiter vordispergiert. Nachfolgend wurde nun mit einem Rotor-Stator-Dispergiergerät bei 10000 U/min unter Kühlung (<30 °C) 30 Minuten enddispergiert. Abschließend wurde die Dispersion über ein 500-μm-Sieb filtriert.

**Beispiel D7:**

Dispersion ausgehend von Flammkieselsäure mit einer spezifischen Oberfläche von 300 m2/g und quartäres Silansystem (CPTEO/TMEDA-System aus Vergleichsbeispiel 1)

(Vergleichsbeispiel)

560 g Flammkieselsäure wurden mit einem Dissolver bei 1500 bis 5000 U/min in eine Mischung aus 1156 g VE-Wasser, 58,3 g quartäres Silansystem (CPTEO/TMEDA) und 25,7 g Essigsäure (25-gewichtsprozentige Lösung in Wasser) eingerührt und 5 Minuten bei 2000 U/min weiterdispergiert. Anschließend wurde mit einem Rotor-Stator-Dispergiergerät (Kinematica Polytron PT6100) über einen Zeitraum von 30 Minuten bei 10000 U/min enddispergiert. Abschließend wurde die Dispersion abgekühlt und über ein 500-μm-Sieb filtriert.

**Beispiel D8:**

Erfindungsgemäße Dispersion ausgehend von Flammkieselsäure mit einer spezifischen Oberfläche von 300 m2/g und Lösung aus Beispiel 1

557 g Flammkieselsäure wurden mit einem Dissolver bei 1500 bis 5000 U/min in eine Mischung aus 885 g VE-Wasser und 58 g der Lösung aus Beispiel 1 eingerührt und 10 Minuten bei 2000 U/min weiterdispergiert. Anschließend wurde mit einem Rotor-Stator-Dispergiergerät (Kinematica Polytron PT6100) über einen Zeitraum von 30 Minuten bei 10000 U/min dispergiert. Abschließend wurde die Dispersion über ein 500-μm-Sieb filtriert.

**Tabelle :**

| **Physikalisch-chemische Daten der Dispersionen D5 bis D8**<br>*) nach Trocknen bis zur Gewichtskonstanz bei 125 °C; | | | | | |
|---|---|---|---|---|---|
| | | Vergleich | | | gemäß Erfindung |
| | | **D5** | **D6** | **D7** | **D8** |
| Feststoffgehalt*) | Gew.-% | 22,0 | 30 | 33 | 39 |
| Teilchendurchme sser **) | nm | 132 | 125 | 121 | 114 |
| Viskosität***) | mPa s | 5600 | 2800 | 3580 | 5380 |
| **) nach dyn. Lichtstreuung (Horiba LB-500);<br>***) bei 1000 1/s; 23 °C; | | | | | |

Neben Flammkieselsäure mit einer spezifischen Oberfläche (BET-Oberfläche 300 m2/g) können erfindungsgemäße Dispersionen auch auf Basis anderer Flammkieselsäure mit einer spezifischen Oberfläche hergestellt werden, wie die Beispiele D9 bis D12 zeigen.

**Beispiele D9 bis D12:**

Allgemeine Herstellvorschrift (Mengenangaben siehe Tabelle)

Das Flammkieselsäure-Pulver wurde mit einem Dissolver bei 1500 bis 5000 U/min in eine Mischung aus 885 g VE-Wasser und der entsprechenden Menge der Lösung aus Beispiel 1 eingerührt und 10 Minuten bei 2000 U/min weiterdispergiert. Anschließend wurde mit einem Rotor-Stator-Dispergiergerät (Kinematica Polytron PT6100) über einen Zeitraum von 30 Minuten bei 10000 U/min dispergiert. Abschließend wurde die Dispersion über ein 500-μm-Sieb filtriert.

**Tabelle :**

| **Herstellparameter und physikalisch-chemische Daten der Dispersionen D9 bis D12** | | | | | |
|---|---|---|---|---|---|
| | | **D9** | **D10** | **D11** | **D12** |
| Flammkieselsäure - Type(BET) | m2/g | 150 | 200 | 255 | 255 |
| Einsatzmenge Flammkieselsäure | g | 472 | 375 | 335 | 420 |
| Einsatzmenge Lösung aus Beispiel 1 | g | 26,1 | 27,7 | 31,5 | 39,5 |
| Feststoffgehalt*) | Gew.-% | 35 | 30,2 | 28 | 32,6 |
| Teilchendurchme sser **) | nm | 159 | 150 | 145 | 140 |
| Viskosität***) | mPa s | 68 | 58 | 45 | 125 |
| *) nach Trocknen bis zur Gewichtskonstanz bei 125 °C;<br>**) nach dyn. Lichtstreuung (Horiba LB-500);<br>***) bei 1000 1/s; 23 °C; | | | | | |

**Herstellung von Streichfarben**

**Beispiel S1 (Vergleichsbeispiel):**

Zu der Dispersion D1 wurde jeweils mittels eines Dissolvers bei 500 U/min eine 12-gewichtsprozentige Lösung von Polyvinylalkohol PVA 235, Fa. Kuraray Europe, gegeben und 10 Minuten gerührt. Es wurde soviel PVA 235 zugegeben, dass das Verhältnis Siliciumdioxid zu PVA (trocken) 5 : 1 betrugt (bzw. 6 : 1 für S9 und S10). Zur Viskositätseinstellung wurde soviel Wasser zugegeben, dass sich der in der Tabelle angegebene Feststoffgehalt einstellte. Nachfolgend wurde eine 7-gewichtsprozentige Lösung von Borsäure in Wasser zugegeben. Die Menge der Borsäure betrug 12,5 Gew.-% der Menge des Polyvinylalkoholes. Abschließend wurde die Glyoxal-enthaltende Zusammensetzung "Cartabond TSI" der Fa. Clariant zugegeben. Die Menge entsprach 4,8 Gew.-% der Menge des Polyvinylalkohols. Die Viskosität der Ink-Jet Streichfarbe wurde nach 24 h mittels eines Brookfield-Viskosimeters gemessen.

Die Beispiele S2, S3, S4 und S9 bis S12 wurden analog S1 hergestellt, jedoch unter Verwendung der jeweiligen Dispersionen D2, D3, D4 sowie D9 bis D12. Die Feststoffgehalte und Viskositäten der Streichfarben sind in der Tabelle 4 wiedergegeben.

**Tabelle 3:**

| **Feststoffgehalte und Viskositäten der Streichfarben S1 bis S4** | | | | | |
|---|---|---|---|---|---|
| | | Vergleichsbeispiel | | | gemäß Erfindung |
| | | **S1** | **S2** | **S3** | **S4** |
| aus | | D1 | D2 | D3 | D4 |
| Feststoffgehalt | Gew.-% | 17,5 | 22,6 | 23,1 | 24,3 |
| Viskosität*) | mPa s | 3680 | 5350 | 3410 | 3200 |
| *) Viskosität (Brookfield) bei 100 U/min und 20 °C; gemessen nach 24 h | | | | | |

**Tabelle 4:**

| Feststoffgehalte und Viskositäten der Streichfarben S9-S12 | | | | | |
|---|---|---|---|---|---|
| gemäß Erfindung | | | | | |
| | | **S9** | **S10** | **S11** | **S12** |
| aus | | D9 | D10 | D11 | D12 |
| Feststoffgehalt | Gew.-% | 25,1 | 24,3 | 22,9 | 23,1 |
| Viskosität*) | mPa s | 4210 | 2860 | 3410 | 2200 |

**Herstellung der Ink-Jet-Beschichtung**

Die erfindungsgemäße Streichfarbe S4 und S9 bis S12 wurde mit Hilfe eines profilierten Rakelstabs auf ein Photobasispapier (Dicke 300 $\mu$m) aufgetragen. Die Nassfilmdicke der Streichfarbe betrug 80 $\mu$m. Die Beschichtung wurde bei 105 °C über einen Zeitraum von 8 Minuten getrocknet. Es wurde ein gleichmäßiges Auftragsgewicht von 22 g/m$^2$ erzielt. Die beschichteten Papiere wurden auf einem Tintenstrahldrucker vom Typ Canon PIXMA iP6600D mit höchster Auflösung bedruckt. Die Bewertung der Druckergebnisse ist in Tabelle 5 wiedergegeben.

**Tabelle 5:**

| Bewertung*) der Druckergebnisse | | | | | | | | |
|---|---|---|---|---|---|---|---|---|
| | **S1** | **S2** | **S3** | **S4** | **S9** | **S10** | **S11** | **S12** |
| Farbintensität | 2 | 2 | 2 | 2 | 3 | 2,5 | 2 | 2 |
| Auflösung | 2,5 | 2 | 2 | 2 | 3 | 3 | 2,5 | 2 |
| Farbverlauf**) | 1,5 | 1 | 1 | 1 | 3 | 2,5 | 2 | 2,5 |
| Farbverschiebung | 1,75 | 1,5 | 1,5 | 1,5 | 3 | 2,5 | 1,75 | 1,5 |
| Glanz***) | 45,1 | 43,5 | 43,1 | 45,3 | 30,1 | 39,8 | 42,3 | 45,3 |
| *) Beste Note 1, schlechteste Note 6; **) Bleeding;<br>***) bei 60° Betrachtungswinkel | | | | | | | | |

**Patentansprüche**

**1.** Quartäre-aminoalkoholfunktionelle, siliciumorganische Verbindungen, umfassend quartäre-aminoalkoholfunktionelle Silanole sowie quartäre-aminoalkoholfunktionelle Siloxanololigomere mit Si-O-vernetzten Strukturelementen, die kettenförmige, cyclische und/oder vernetzte Strukturen bilden, und die erhältlich sind aus einer Umsetzung von mindestens einem Silan der Formeln II, IV oder mindestens einem Hydrolyse-, Kondensations- oder Cokondensationsprodukt ausgehend von Silanen der Formel II und/oder IV, Wasser und mindestens einem Aminoalkohol der Formel III und optional der dabei gebildete Hydrolysealkohol zumindest teilweise aus dem System entfernt wird,

- wobei mindestens eine Struktur besagter quartäre-aminoalkoholfunktionelle, siliciumorganische Verbindungen in idealisierter Form der allgemeinen Formel I entspricht,

$$(R^1O)[(R^1O)_{1-x-y}(R^2)_xSi(C^+)_{1+y}O]_aR^1\ [a \cdot (1+y)]Hal^- \qquad (I)$$

mit $C^+$ in Formel I unabhängig gleich einer Gruppe der Formel V

$$-(R^3)_nCH_2\text{-}N^+[-(CH2)_mOH]_z(R^4)_{3-z} \qquad (V)$$

in Formel I sind $R^1$ unabhängig voneinander im Wesentlichen Wasserstoff oder eine lineare, verzweigte oder cyclische Alkyl-Gruppe mit 1 bis 8 C-Atomen, $R^2$ sind gleich oder verschieden und $R^2$ steht für eine lineare, verzweigte oder cyclische Alkyl-Gruppe mit 1 bis 8 C-Atomen oder für eine Aryl-, Arylalkyl- oder Acyl-Gruppe, in Formel V sind $R^3$ gleich oder verschieden und $R^3$ stellt eine lineare, verzweigte oder cyclische Alkylengruppe mit 1 bis 18 C-Atomen dar, $R^4$ sind gleich oder verschieden und $R^4$ steht für eine Gruppe umfassend C1- bis

C16-Atome,
in Formeln I und V sind unabhängig n gleich 0 oder 1, m eine ganze Zahl zwischen 1 und 16 und z gleich 1 oder 2 oder 3 und Hal für Chlor oder Brom steht, und x gleich 0 oder 1, y gleich 0 oder 1 und (x + y) gleich 0 oder 1 sind,
und a größer gleich 1 ist,
- wobei das Silan der Formel II ein Halogenalkylsilan ist,

$$(R^10)_{3-x-y}(R^2)_xSi[(R^3)_nCH_2Hal]_{1+y} \quad (II),$$

und das Silan der Formel IV einem quartären-aminoalkoholfunktionellen Silan

$$(R^10)_{3-x-y}(R^2)_xSi[(R^3)_nCH_2\text{-}N^+[-(CH_2)_mOH]_z(R^4)_{3-z}]_{1+y} \cdot (1+y)\ [Hal^-] \quad (IV),$$

und der Aminoalkohol der Formel III entspricht,

$$[HO\text{-}(CH_2)_m\text{-}]_zN(R^4)_{3-z} \quad (III),$$

wobei in den Formeln II, III sowie IV unabhängig Gruppen $R^1$ gleich oder verschieden sind und $R^1$ für ein Wasserstoff, eine lineare, verzweigte oder cyclische Alkyl-Gruppe mit 1 bis 8 C-Atomen, eine Aryl-, Arylalkyl- oder Acyl-Gruppe steht, Gruppen $R^2$ gleich oder verschieden sind und $R^2$ für eine lineare, verzweigte oder cyclische Alkyl-Gruppe mit 1 bis 8 C-Atomen oder für eine Aryl-, Arylalkyl- oder Acyl-Gruppe steht, $R^3$, $R^4$, Hal sowie n, m und z unabhängig voneinander wie vorstehend definiert sind, und x gleich 0, 1 oder 2, y gleich 0, 1 oder 2 und (x + y) gleich 0, 1 oder 2 sind.

**2.** Verfahren zur Herstellung einer Zusammensetzung enthaltend quartäre-aminoalkoholfunktionelle, siliciumorganische Verbindungen, umfassend quartäre-aminoalkoholfunktionelle Siloxanololigomere indem man

- als Komponente A

(i) mindestens ein halogenalkylfunktionelles Alkoxysilan der allgemeinen Formel II

$$(R^10)_{3-x-y}(R^2)_xSi[(R^3)_nCH_2Hal]_{1+y} \quad (II),$$

worin Gruppen $R^1$ gleich oder verschieden sind und $R^1$ für ein Wasserstoff, eine lineare, verzweigte oder cyclische Alkyl-Gruppe mit 1 bis 8 C-Atomen, eine Aryl-, Arylalkyl- oder Acyl-Gruppe steht,
Gruppen $R^2$ gleich oder verschieden sind und $R^2$ für eine lineare, verzweigte oder cyclische Alkyl-Gruppe mit 1 bis 8 C-Atomen oder für eine Aryl-, Arylalkyl- oder Acyl-Gruppe steht,
Gruppen $R^3$ gleich oder verschieden sind und $R^3$ eine lineare, verzweigte oder cyclische Alkylengruppe mit 1 bis 18 C-Atomen darstellt,
n gleich 0 oder 1 ist und Hal für Chlor oder Brom steht,
und x gleich 0, 1 oder 2, y gleich 0, 1 oder 2 und (x + y) gleich 0, 1 oder 2 sind, oder
(ii) ein Hydrolyse- oder Kondensationsprodukt von mindestens einem Alkoxysilan der zuvor genannten allgemeinen Formel II
oder
(iii) ein Gemisch aus mindestens einem Alkoxysilan der zuvor genannten allgemeinen Formel II und einem Hydrolyse- und/oder Kondensationsprodukt von mindestens einem Alkoxysilan der zuvor genannten allgemeinen Formel II

- mit einem Aminoalkohol der allgemeinen Formel III als Komponente B,

$$[HO\text{-}(CH_2)_m\text{-}]_zN(R^4)_{3-z} \quad (III),$$

worin Gruppen $R^4$ gleich oder verschieden sind und $R^4$ für eine Gruppe umfassend C1- bis C16-Atome steht, m für eine ganze Zahl zwischen 1 und 16 und z für 1 oder 2 oder 3 stehen,
- umsetzt,
- das Verfahren in mindestens einem Schritt in Gegenwart einer definierten Menge Wasser durchführt und
- optional den gebildeten Hydrolysealkohol zumindest teilweise aus dem System entfernt.

**3.** Verfahren nach Anspruch 2,
**dadurch gekennzeichnet, dass**
man die Umsetzung der Komponente A und der Komponente B in Gegenwart einer definierten Menge Wasser durchführt oder die Komponente A mit Komponente B umsetzt und anschließend in Gegenwart einer definierten Menge Wasser hydrolysiert.

**4.** Verfahren nach Anspruch 2 oder 3,
**dadurch gekennzeichnet, dass**
man als Komponente B N,N-Dimethylethanolamin, N,N-Diethylethanolamin, N-Methyldiethanolamin, N-Ethyldiethanolamin oder Triethanolamin oder ein Gemisch umfassend mindestens zwei der zuvor genannten Verbindungen einsetzt.

**5.** Verfahren nach einem der Ansprüche 2 bis 4,
**dadurch gekennzeichnet, dass**
man Wasser in einer Menge von 0,5 bis 500 mol Wasser je mol vorliegenden Silicium-Atome der Komponente A einsetzt, insbesondere 0,5 bis 25 mol Wasser, bevorzugt 5 bis 25 mol Wasser je mol Silicium-Atome bezüglich der eingesetzten Komponente A, besonders bevorzugt 10 bis 25 mol Wasser je mol der Silicium-Atome, insbesondere 12 bis 25 mol Wasser je mol Silicium-Atome.

**6.** Verfahren nach einem der Ansprüche 2 bis 5,
**dadurch gekennzeichnet, dass**
man das Wasser kontinuierlich oder diskontinuierlich zur Komponente A gegebenenfalls im Gemisch mit der Komponente B oder zur gebildeten quartären-aminoalkoholfunktionellen, siliciumorganischen Verbindung der Formel IV

$$(R^10)_{3-x-y}(R^2)_xSi[(R^3)_nCH_2\text{-}N^+[\text{-}(CH_2)_mOH]_z(R^4)_{3-z}]_{1+y} \cdot (1+y)\ [Hal^-] \qquad (IV),$$

dosiert, vorzugsweise das Wasser diskontinuierlich unter Rühren zugibt, besonders bevorzugt chargenweise, in 1 bis 15 Chargen, insbesondere in 2 bis 12 Chargen, wobei in Formel IV $R^1$, $R^2$, $R^3$, $R^4$, x, y, z, n und m die vorstehend definierte Bedeutung gemäß Anspruch 2 aufweisen

**7.** Verfahren nach einem der Ansprüche 2 bis 6,
**dadurch gekennzeichnet, dass**
man chargenweise jeweils als definierte Menge Wasser 0,5 bis 4,0 mol Wasser je mol Silicium-Atome zugibt, bevorzugt um 1,0 bis 2,0 mol Wasser je mol Silicium-Atome.

**8.** Verfahren nach einem der Ansprüche 2 bis 7,
**dadurch gekennzeichnet, dass**
man die Umsetzung in Gegenwart eines Lösemittels, insbesondere Alkohols, durchführt, bevorzugt in Gegenwart des bei der Hydrolyse der Verbindung der Formel II entstehenden Alkohols, besonders bevorzugt in Gegenwart von Ethanol, Methanol, n-Propanol oder iso-Propanol.

**9.** Verfahren nach einem der Ansprüche 2 bis 8,
**dadurch gekennzeichnet, dass**
man die Umsetzung bei einem Druck von 1 mbar bis 100 bar, bevorzugt bei Umgebungsdruck (Normaldruck), und einer Temperatur von 20 und 150 °C, bevorzugt von 40 bis 120 °C, besonders bevorzugt von 60 bis 100 °C, insbesondere von 80 bis 95 °C, durchführt.

**10.** Verfahren nach einem der Ansprüche 2 bis 9,
**dadurch gekennzeichnet, dass**
man flüchtiges Lösemittel und gegebenenfalls zu flüchtigem Lösemittel hydrolysierbare Gruppen, insbesondere Hydrolysealkohol, bis auf ein Gehalt in der Gesamtzusammensetzung von unter 12 Gew.-% bis 0 Gew.-% entfernt, vorzugsweise unter 10 Gew.-%, besonders bevorzugt unter 5 Gew.-%, ganz besonders bevorzugt 2 Gew.-% bis 0,0001 Gew.-%, insbesondere 1 bis $\leq$ 0,5 Gew.-%, bevorzugt 0,5 bis $\leq$ 0,1 Gew.-%, wobei das Entfernen von flüchtigem Lösemittel während der Umsetzung und/oder danach durch Destillation, insbesondere unter vermindertem Druck im Bereich von 0,1 bis 1000 mbar, bevorzugt von 80 bis 300 mbar, besonders bevorzugt im Bereich von 80 bis 180 mbar, erfolgen kann.

**11.** Verfahren nach einem der Ansprüche 2 bis 10,

**dadurch gekennzeichnet, dass**
man als Komponente A mindestens eine Siliciumverbindung aus der Reihe 3-Chlorpropyltrimethoxysilan, 3-Chlorpropyltriethoxysilan, 3-Chlorpropyl-methyldimethoxysilan, 3-Chlorpropyl-methyldiethoxysilan, 3-Chlorpropyl-dimethylethoxysilan oder 3-Chlorpropyl-dimethylmethoxysilan oder ein Hydrolyse- oder Kondensationsprodukt der zuvor genannten Alkoxysilane einsetzt.

**12.** Verfahren nach einem der Ansprüche 2 bis 11,
**dadurch gekennzeichnet, dass**
man die Komponenten A und B in Bezug auf die Halogenalkyl-Gruppe der Komponente A und den tertiären Stickstoff der Komponente B in einem molaren Verhältnis von 2 : 1 bis 1 : 100 einsetzt, insbesondere von 2 : 1 bis 1 : 10, besonders bevorzugt von etwa 1 : 1 bis etwa 1 : 1,5.

**13.** Verfahren nach einem der Ansprüche 2 bis 12,
**dadurch gekennzeichnet, dass**
man

a) - die Komponente A zusammen mit einem Lösemittel vorlegt und eine definierte Menge Wasser zugibt,

- die Komponente B zusetzt,
- gebildeten Hydrolysealkohol zumindest teilweise aus dem System entfernt, wobei man Wasser in definierten Mengen zusetzt,

oder
b) - die Komponente A vorlegt und ein Lösemittel zugibt,

- eine definierte Menge Wasser zugibt,
- die Komponente B zusetzt,
- gebildeten Hydrolysealkohol zumindest teilweise aus dem System entfernt, wobei man Wasser in definierten Mengen zusetzt,

oder
c) - die Komponente A vorlegt und ein Lösemittel zugibt,

- eine definierte Menge Wasser zugibt,
- gebildeten Hydrolysealkohol zumindest teilweise aus dem System entfernt,
- danach die Komponente B zusetzt und
- gebildeten Hydrolysealkohol zumindest teilweise aus dem System entfernt,
- eine definierte Menge Wasser zugibt und
- gebildeten Hydrolysealkohol zumindest teilweise aus dem System entfernt, wobei man Wasser in definierten Mengen zusetzt,

oder
d) - die Komponente A mit der Komponente B bei erhöhter Temperatur reagieren lässt,

- weitere Komponente B in definierter Menge zusetzt und
- nachfolgend eine definierte Menge Wasser zugibt,
- gebildeten Hydrolysealkohol zumindest teilweise aus dem System entfernt, wobei man Wasser in definierten Mengen zusetzt,

oder
e) - die Komponente A vorlegt und ein Lösemittel zugibt,

- eine definierte Menge Wasser zugibt und
- gebildeten Hydrolysealkohol zumindest teilweise aus dem System entfernt,
- nachfolgend Komponente B zusetzt und
- bei erhöhter Temperatur eine definierte Menge Wasser zugibt und
- gebildeten Hydrolysealkohol zumindest teilweise aus dem System entfernt, wobei man gegebenenfalls Wasser in definierten Mengen zusetzt

oder
f) - die Komponente A zusammen mit einem Lösemittel vorlegt und eine definierte Menge Wasser zugibt,

- gebildeten Hydrolysealkohol zumindest teilweise aus dem System entfernt,
- die Komponente B zusetzt und
- gebildeten Hydrolysealkohol zumindest teilweise aus dem System entfernt, wobei man Wasser in definierten Mengen zusetzt.

**14.** Verfahren nach einem der Ansprüche 2 bis 13,
**dadurch gekennzeichnet, dass**
man die Zusammensetzung durch Zugabe von Wasser auf eine Viskosität kleiner 1500 mPa s, einstellt, vorzugsweise auf eine Viskosität im Bereich zwischen 1 bis 300 mPa s, bevorzugt 1 bis 100 mPa s, besonders bevorzugt 5 bis 20 mPa s.

**15.** Zusammensetzung enthaltend quartäre-aminoalkoholfunktionelle, siliciumorganische Verbindungen, insbesondere Siloxanololigomere und Verbindungen der Formel IV, und Wasser, erhältlich nach einem Verfahren gemäß einem der Ansprüche 2 bis 14.

**16.** Zusammensetzung nach Anspruch 15,
**gekennzeichnet durch**
einen Feststoffgehalt in der Zusammensetzung von 0,1 bis 99,9 Gew.-% , vorzugsweise von 0,5 bis 90 Gew.-%, insbesondere von 5 bis 70 Gew.-%, bevorzugt von 7 bis 60 Gew.%, besonders bevorzugt von 30 bis 60 Gew.-%, wobei alle Bestandteile in der Zusammensetzung in Summe 100 Gew.-% ergeben.

**17.** Zusammensetzung nach Anspruch 15 oder 16,
**gekennzeichnet durch**
einen Gesamt-Stickstoffgehalt von 0,1 bis 15 Gew.-%, insbesondere von 1,0 bis 4,0 Gew.-% bei einer Viskosität von 1 bis 100 mPa s, besonders bevorzugt 5 bis 20 mPa s, und gegebenenfalls einem pH-Wert im Bereich von 5,0 bis 11,0, bevorzugt von 6,0 bis 9,0.

**18.** Zusammensetzung nach einem der Ansprüche 15 bis 17,
**dadurch gekennzeichnet, dass**
die Zusammensetzung mindestens eine weitere der folgenden Komponenten aus der Reihe Pigmente, Füllstoffe, Binder, Vernetzer, optische Aufheller, Lackhilfsstoffe oder andere Hilfsstoffe enthält.

**19.** Verwendung einer Zusammensetzung oder einer quartärenaminoalkoholfunktionellen, siliciumorganischen Verbindung nach einem der Ansprüche 1 bis 18 zur Modifizierung, Behandlung und/oder Herstellung von Formulierungen, Substraten, Artikeln, organischen oder anorganischen Materialien, Kompositmaterialien, Papierstreichmassen, Inkjet-Anwendungen, bevorzugt zur Herstellung von Inkjet-Fotopapieren; Papierbeschichtungsmitteln, Papier, Textilien, Füllstoffen, biozid, fungizid und/oder viruzid wirkenden Formulierungen, biozid, fungizid und/oder viruzid wirkenden Beschichtungen, zur Ausrüstung von Fasermaterialien, Garnen und/oder Textilien, zur Textilimprägnierung, zur Antistatikausrüstung von Oberflächen, insbesondere flächiger, faseriger, gewebter, körniger und/oder pulverförmiger Materialien, zur kationischen Modifizierung von anorganischen oder polaren organischen Oberflächen, beispielsweise Füllstoffen, Pigmenten, Glas-, Mineral- und keramischen Oberflächen, polaren Kunst- und Naturstoffen, wie beispielsweise Polyester, Polyamide, Wolle, Siede, Cellulose, Lignocellulose, Holz, Proteine, Zucker, Polysaccharide und dergleichen, die auch in partikulärer Form oder Faserform, im cm-, mm-, mikronisierten oder auch im Nanometer-Bereich vorliegen können.

## Claims

**1.** Quaternary-amino alcohol-functional, organosilicon compounds, comprising quaternary-amino alcohol-functional silanols and also quaternary-amino alcohol-functional siloxanol oligomers with Si-O-crosslinked structural elements, which form catenate, cyclic and/or crosslinked structures and which are obtainable from a reaction of at least one silane of the formulae II, IV or at least one hydrolysis, condensation or co-condensation product starting from silanes of the formula II and/or IV, water and at least one amino alcohol of the formula III and optionally the hydrolysis alcohol formed in this reaction is at least partly removed from the system,

- where at least one structure of said quaternary-amino alcohol-functional, organosilicon compounds corresponds in idealized form to the general formula I,

$$(R^1O)[(R^1O)_{1-x-y}(R^2)xSi(C^+)_{1+y}O]_aR^1\ [a \cdot (1+y)]Hal^- \qquad (I)$$

where $C^+$ in formula I is independently a group of the formula V

$$-(R^3)_nCH_2-N^+[-(CH_2)_mOH]_z(R^4)_{3-z} \qquad (V),$$

in formula I, $R^1$ independently at each occurrence is substantially hydrogen or a linear, branched or cyclic alkyl group having 1 to 8 C atoms, $R^2$ are identical or different and $R^2$ is a linear, branched or cyclic alkyl group having 1 to 8 C atoms or is an aryl, arylalkyl or acyl group,
in formula V $R^3$ are identical or different and $R^3$ is a linear, branched or cyclic alkylene group having 1 to 18 C atoms, $R^4$ are identical or different and $R^4$ is a group comprising C1 to C16 atoms,
in formulae I and V, independently, n is 0 or 1, m is an integer between 1 and 16 and z is 1 or 2 or 3, and Hal is chloro or bromo, and x is 0 or 1, y is 0 or 1 and (x + y) is 0 or 1,
and a is greater than or equal to 1,
- where the silane of the formula II is a haloalkylsilane,

$$(R^1O)_{3-x-y}(R^2)_xSi[(R^3)_nCH_2Hal]_{1+y} \qquad (II),$$

and the silane of the formula IV corresponds to a quaternary-amino alcohol-functional silane

$$(R^10)_{3-x-y}(R^2)_xSi[(R^3)_nCH_2-N^+[-(CH_2)_mOH]_z(R^4)_{3-z}]_{1+y} \cdot (1+y)\ [Hal-] \qquad (IV),$$

and the amino alcohol corresponds to the formula III,

$$[HO-(CH_2)_m-]_zN(R^4)_{3-z} \qquad (III),$$

where in the formulae II, III and IV, independently groups $R^1$ are identical or different and $R^1$ is a hydrogen, a linear, branched or cyclic alkyl group having 1 to 8 C atoms, or an aryl, arylalkyl or acyl group, groups $R^2$ are identical or different and $R^2$ is a linear, branched or cyclic alkyl group having 1 to 8 C atoms or is an aryl, arylalkyl or acyl group, $R^3$, $R^4$, Hal and also n, m and z, independently of one another, are as defined above, and x is 0, 1 or 2, y is 0, 1 or 2 and (x + y) is 0, 1 or 2.

**2.** Process for preparing a composition comprising quaternary-amino alcohol-functional, organosilicon compounds, comprising quaternary-amino alcohol-functional siloxanol oligomers, by reacting

- as component A

(i) at least one haloalkyl-functional alkoxysilane of the general formula II

$$(R^10)_{3-x-y}(R^2)_xSi[(R^3)_nCH_2Hal]_{1+y} \qquad (II),$$

in which groups $R^1$ are identical or different and $R^1$ is a hydrogen, a linear, branched or cyclic alkyl group having 1 to 8 C atoms, or an aryl, arylalkyl or acyl group,
groups $R^2$ are identical or different and $R^2$ is a linear, branched or cyclic alkyl group having 1 to 8 C atoms or is an aryl, arylalkyl or acyl group,
groups $R^3$ are identical or different and $R^3$ is a linear, branched or cyclic alkylene group having 1 to 18 C atoms,
n is 0 or 1 and Hal is chloro or bromo,
and x is 0, 1 or 2, y is 0, 1 or 2 and (x + y) is 0, 1 or 2, or
(ii) a hydrolysis or condensation product of at least one alkoxysilane of the aforementioned general formula II or
(iii) a mixture of at least one alkoxysilane of the aforementioned general formula II and a hydrolysis and/or condensation product of at least one alkoxysilane of the aforementioned general formula II

- with an amino alcohol of the general formula III as component B,

$$[HO\text{-}(CH_2)_m\text{-}]_zN(R^4)_{3-z} \qquad (III),$$

in which groups $R^4$ are identical or different and $R^4$ is a group comprising C1 to C16 atoms, m is an integer between 1 and 16 and z is 1 or 2 or 3,
- carrying out the process in at least one step in the presence of a defined amount of water, and
- optionally removing the resultant hydrolysis alcohol at least partly from the system.

**3.** Process according to Claim 2,
**characterized in that**
the reaction of component A and of component B is carried out in the presence of a defined amount of water, or component A is reacted with component B and the product is subsequently hydrolyzed in the presence of a defined amount of water.

**4.** Process according to Claim 2 or 3,
**characterized in that**
use is made as component B of N,N-dimethylethanolamine, N,N-diethylethanolamine, N-methyldiethanolamine, N-ethyldiethanolamine or triethanolamine or of a mixture comprising at least two of the aforementioned compounds.

**5.** Process according to any of Claims 2 to 4,
**characterized in that**
water is used in an amount of 0.5 to 500 mol of water per mole of silicon atoms present in component A, more particularly 0.5 to 25 mol of water, preferably 5 to 25 mol of water per mole of silicon atoms in respect of component A used, more preferably 10 to 25 mol of water per mole of the silicon atoms, more particularly 12 to 25 mol of water per mole of silicon-atoms.

**6.** Process according to any of Claims 2 to 5,
**characterized in that**
the water is metered continuously or discontinuously to component A, optionally in a mixture with component B, or to the quaternary-amino alcohol-functional, organosilicon compound of formula IV

$$(R^10)_{3-x-}y(R^2)_xSi[(R^3)_nCH_2\text{-}N+[\text{-}(CH_2)_mOH]_z(R^4)_{3-z}]_{1+y} \cdot (1+y)\ [Hal\text{-}] \qquad (IV)$$

that is formed, the water being added preferably discontinuously with stirring, more preferably portionwise, in 1 to 15 portions, more particularly in 2 to 12 portions, where in formula IV $R^1$, $R^2$, $R^3$, $R^4$, x, y, z, n and m have the above-defined definition according to Claim 2.

**7.** Process according to any of Claims 2 to 6,
**characterized in that**
portionwise in each case as defined amount of water, 0.5 to 4.0 mol of water per mole of silicon atoms are added, preferably 1.0 to 2.0 mol of water per mole of silicon atoms.

**8.** Process according to any of Claims 2 to 7,
**characterized in that**
the reaction is carried out in the presence of a solvent, more particularly alcohol, preferably in the presence of the alcohol formed in the hydrolysis of the compound of the formula II, more preferably in the presence of ethanol, methanol, n-propanol or isopropanol.

**9.** Process according to any of Claims 2 to 8,
**characterized in that**
the reaction is carried out under a pressure of 1 mbar to 100 bar, preferably at ambient pressure (atmospheric pressure), and at a temperature of 20 and 150°C, preferably of 40 to 120°C, more preferably of 60 to 100°C, more particularly of 80 to 95°C.

**10.** Process according to any of Claims 2 to 9,
**characterized in that**
volatile solvent and optionally groups which can be hydrolyzed to volatile solvent, more particularly hydrolysis alcohol,

are removed down to a level in the overall composition of below 12% by weight to 0% by weight, preferably below 10% by weight, more preferably below 5% by weight, very preferably 2% by weight to 0.0001% by weight, more particularly 1% to ≤ 0.5% by weight, preferably 0.5% to ≤ 0.1% by weight, it being possible for the removal of volatile solvent to take place during the reaction and/or thereafter by distillation, more particularly under reduced pressure in the range from 0.1 to 1000 mbar, preferably from 80 to 300 mbar, more preferably in the range from 80 to 180 mbar.

**11.** Process according to any of Claims 2 to 10,
**characterized in that**
use is made as component A of at least one silicon compound from the series 3-chloropropyltrimethoxysilane, 3-chloropropyltriethoxysilane, 3-chloropropylmethyldimethoxysilane, 3-chloropropylmethyldiethoxysilane, 3-chloropropyldimethylethoxysilane or 3-chloropropyldimethylmethoxysilane, or of a hydrolysis or condensation product of the aforementioned alkoxysilanes.

**12.** Process according to any of Claims 2 to 11,
**characterized in that**
the components A and B are used, in relation to the haloalkyl group of component A and to the tertiary nitrogen of component B, in a molar ratio of 2:1 to 1:100, more particularly of 2:1 to 1:10, very preferably of about 1:1 to about 1:1.5.

**13.** Process according to any of Claims 2 to 12,
**characterized in that**

a) - component A is introduced together with a solvent and a defined amount of water is added,

- component B is added,
- hydrolysis alcohol formed is removed at least partly from the system, and water is added in defined amounts,

or
b) - component A is introduced and a solvent is added,

- a defined amount of water is added,
- component B is added,
- hydrolysis alcohol formed is removed at least partly from the system, and water is added in defined amounts,

or
c) - component A is introduced and a solvent is added,

- a defined amount of water is added,
- hydrolysis alcohol formed is removed at least partly from the system,
- thereafter component B is added and
- hydrolysis alcohol formed is removed at least partly from the system,
- a defined amount of water is added and
- hydrolysis alcohol formed is removed at least partly from the system, and water is added in defined amounts,

or
d)- component A is reacted with component B at elevated temperature,

- further component B is added in a defined amount, and
- subsequently a defined amount of water is added,
- hydrolysis alcohol formed is removed at least partly from the system, and water is added in defined amounts,

or
e) - component A is introduced and a solvent is added,

- a defined amount of water is added and
- hydrolysis alcohol formed is removed at least partly from the system,
- subsequently component B is added and
- at elevated temperature a defined amount of water is added, and
- hydrolysis alcohol formed is removed at least partly from the system, and optionally water is added in

defined amounts,

or

f) - component A is introduced together with a solvent and a defined amount of water is added,

- hydrolysis alcohol formed is removed at least partly from the system,
- component B is added, and
- hydrolysis alcohol formed is removed at least partly from the system,

and water is added in defined amounts.

**14.** Process according to any of Claims 2 to 13,
**characterized in that**
the composition is adjusted by addition of water to a viscosity of less than 1500 mPa s, preferably to a viscosity in the range between 1 to 300 mPa s, more preferably 1 to 100 mPa s, very preferably 5 to 20 mPa s.

**15.** Composition comprising quaternary-amino alcohol-functional, organosilicon compounds, more particularly siloxanol oligomers and compounds of the formula IV, and water, obtainable by a process according to any of Claims 2 to 14.

**16.** Composition according to Claim 15,
**characterized by**
a solids content in the composition of 0.1% to 99.9% by weight, preferably of 0.5% to 90% by weight, more particularly of 5% to 70% by weight, more preferably of 7% to 60% by weight, very preferably of 30% to 60% by weight, with all of the constituents in the composition making 100% by weight in total.

**17.** Composition according to Claim 15 or 16,
**characterized by**
a total nitrogen content of 0.1% to 15% by weight, more particularly of 1.0 to 4.0% by weight for a viscosity of 1 to 100 mPa s, more preferably 5 to 20 mPa s, and optionally for a pH in the range from 5.0 to 11.0, preferably from 6.0 to 9.0.

**18.** Composition according to any of Claims 15 to 17,
**characterized in that**
the composition comprises at least one further of the following components from the series pigments, fillers, binders, crosslinkers, optical brighteners, coating auxiliaries or other auxiliaries.

**19.** Use of a composition or of a quaternary-amino alcohol-functional, organosilicon compound according to any of Claims 1 to 18 for modification, treatment and/or production of formulations, substrates, articles, organic or inorganic materials, composite materials, papercoating slips, inkjet applications, preferably for producing inkjet photographic papers; papercoating materials, paper, textiles, fillers, biocidally, fungicidally and/or virucidally acting formulations, biocidally, fungicidally and/or virucidally acting coatings, for finishing of fiber materials, yarns and/or textiles, for textile impregnation, for antistaticization of surfaces, more particularly of sheet-like, fibrous, woven, granular and/or pulverulent materials, for cationic modification of inorganic or polar organic surfaces, as for example fillers, pigments, glass surfaces, mineral surfaces and ceramic surfaces, polar synthetic and natural materials, as for example polyesters, polyamides, wool, silk, cellulose, lignocellulose, wood, proteins, sugars, polysaccharides and the like, which may also be present in particulate form or fiber form, in the cm, mm, micronized or else in the nanometer range.

## Revendications

**1.** Composés organosiliciés à fonction aminoalcool quaternaire, comprenant des silanols à fonction aminoalcool quaternaire ainsi que des oligomères siloxanol à fonction aminoalcool quaternaire comportant des éléments structuraux réticulés par liaison Si-0, qui forment des structures en chaîne, cycliques et/ou réticulées, et qui peuvent être obtenus par une réaction d'au moins un silane de formule II, IV ou d'au moins un produit d'hydrolyse, de condensation ou de co-condensation à partir de silanes de formule II et/ou de formule IV, d'eau et d'au moins un aminoalcool de formule III et en option l'alcool résultant de l'hydrolyse ainsi formé est au moins en partie éliminé du système,

- au moins une structure desdits composés organosiliciés à fonction aminoalcool quaternaire correspondant

sous forme idéalisée à la formule générale I

$$(R^1O)[(R^1O)_{1-x-y}(R^2)_xSi(C^+)_{1+y}O]_aR^1\ [a\ .\ (1+y)]Hal^- \qquad (I)$$

$C^+$ dans la formule I représentant chaque fois indépendamment un groupe de formule V

$$-(R^3)_nCH_2-N^+[-(CH_2)_mOH]_z(R^4)_{3-z} \qquad (V)$$

dans la formule I les radicaux $R^1$ représentent, indépendamment les uns des autres, essentiellement un atome d'hydrogène ou un groupe alkyle linéaire, ramifié ou cyclique ayant de 1 à 8 atomes de carbone, les radicaux $R^2$ sont identiques ou différents et $R^2$ représente un groupe alkyle linéaire, ramifié ou cyclique ayant de 1 à 8 atomes de carbone ou un groupe aryle, arylalkyle ou acyle,
dans la formule V les radicaux $R^3$ sont identiques ou différents et $R^3$ représente un groupe alkylène linéaire, ramifié ou cyclique ayant de 1 à 18 atomes de carbone, les radicaux $R^4$ sont identiques ou différents et $R^4$ représente un groupe comprenant de 1 à 16 atomes de carbone,
dans les formules I et V, chacun indépendamment, n vaut 0 ou 1, m représente un nombre entier compris entre 1 et 16 et z vaut 1 ou 2 ou 3 et Hal représente un atome de chlore ou de brome, et x vaut 0 ou 1, y vaut 0 ou 1 et (x + y) vaut 0 ou 1, et a est supérieur ou égal à 1,
- le silane de formule II étant un halogénoalkylsilane,

$$(R^1O)_{3-x-y}(R^2)_xSi[(R^3)_nCH_2Hal]_{1+y} \qquad (II),$$

et le silane de formule IV correspondant à un silane à fonction aminoalcool quaternaire

$$(R^1O)_{3-x-y}(R^2)_xSi[(R^3)_nCH_2-N^+[-(CH_2)_mOH]_z(R^4)_{3-z}]_{1+y}\ (1+y)\ [hal^-] \qquad (IV)$$

et l'aminoalcool correspondant à la formule III,

$$[HO-(CH_2)_m-]_zN(R^4)_{3-z} \qquad (III),$$

dans les formules II, III ainsi que IV, indépendamment les uns des autres, les groupes $R^1$ sont identiques ou différents et $R^1$ représente un atome d'hydrogène, un groupe alkyle linéaire, ramifié ou cyclique ayant de 1 à 8 atomes de carbone, un groupe aryle, arylalkyle ou acyle, les groupes $R^2$ sont identiques ou différents et $R^2$ représente un groupe alkyle linéaire, ramifié ou cyclique ayant de 1 à 8 atomes de carbone ou un groupe aryle, arylalkyle ou acyle, $R^3$, $R^4$, Hal ainsi que n, m et z sont chacun indépendamment tels que définis précédemment, et x vaut 0, 1 ou 2, y vaut 0, 1 ou 2 et (x + y) vaut 0, 1 ou 2.

**2.** Procédé pour la préparation d'une composition contenant des composés organosiliciés à fonction aminoalcool quaternaire, comprenant des oligomères siloxanol à fonction aminoalcool quaternaire, en faisant réagir

- en tant que composant A

(i) au moins un alcoxysilane à fonction halogénoalkyle de formule générale II

$$(R^1O)_{3-x-y}(R^2)_xSi[(R^3)_nCH_2Hal]_{1+y} \qquad (II),$$

dans laquelle les groupes $R^1$ sont identiques ou différents, et $R^1$ représente un atome d'hydrogène, un groupe alkyle linéaire, ramifié ou cyclique ayant de 1 à 8 atomes de carbone, un groupe aryle, arylalkyle ou acyle,
les groupes $R^2$ sont identiques ou différents et $R^2$ représente un groupe alkyle linéaire, ramifié ou cyclique ayant de 1 à 8 atomes de carbone ou un groupe aryle, arylalkyle ou acyle,
les groupes $R^3$ sont identiques ou différents et $R^3$ représente un groupe alkylène, linéaire, ramifié ou cyclique ayant de 1 à 18 atomes de carbone,
n vaut 0 ou 1 et Hal représente un atome de chlore ou de brome,
et x vaut 0, 1 ou 2, y vaut 0, 1 ou 2 et (x + y) vaut 0, 1 ou 2,
ou
(ii) un produit d'hydrolyse ou de condensation d'au moins un alcoxysilane de formule générale II indiquée

précédemment
ou
(iii) un mélange d'au moins un alcoxysilane de formule générale II indiquée précédemment et d'un produit d'hydrolyse et/ou de condensation d'au moins un alcoxysilane de formule générale II indiquée précédemment

- avec un aminoalcool de formule générale III en tant que composant B,

$$[HO\text{-}(CH_2)_m\text{-}]_zN(R^4)_{3-z} \qquad (III),$$

formule dans laquelle les groupes $R^4$ sont identiques ou différents et $R^4$ représente un groupe comprenant de 1 à 16 atomes de carbone, m représente un nombre entier compris entre 1 et 16 et z représente 1 ou 2 ou 3,
- en effectuant le procédé en au moins une étape en présente d'une quantité définie d'eau et
- en option en éliminant du système au moins en partie l'alcool formé lors de l'hydrolyse.

3. Procédé selon la revendication 2,
**caractérisé en ce**
**qu'**on effectue la réaction du composant A et du composant B en présence d'une quantité définie d'eau ou on fait réagir le composant A avec le composant B et ensuite on hydrolyse en présence d'une quantité définie d'eau.

4. Procédé selon la revendication 2 ou 3,
**caractérisé en ce**
**qu'**on utilise comme composant B la N,N-diméthyléthanolamine, la N,N-diéthyléthanolamine, la N-méthyldiéthanolamine, la N-éthyldiéthanolamine ou la triéthanolamine ou un mélange comprenant au moins deux des composés précités.

5. Procédé selon l'une quelconque des revendications 2 à 4,
**caractérisé en ce**
**qu'**on utilise de l'eau en une quantité de 0,5 à 500 moles d'eau par mole d'atomes de silicium présents du composant A, en particulier de 0,5 à 25 moles d'eau, de préférence de 5 à 25 moles d'eau par mole d'atomes de silicium en ce qui concerne le composant A utilisé, de façon particulièrement préférée de 10 à 25 moles d'eau par mole des atomes de silicium, en particulier de 12 à 25 moles d'eau par mole d'atomes de silicium.

6. Procédé selon l'une quelconque des revendications 2 à 5,
**caractérisé en ce**
**qu'**on ajoute par addition dosée l'eau en continu ou en mode discontinu au composant A, éventuellement en mélange avec le composant B ou au composé organosilicié formé, à fonction aminoalcool quaternaire, de formule IV

$$(R^1O)_{3-x-y}(R^2)_xSi[(R^3)nCH_2\text{-}N+[\text{-}(CH_2)_mOH]_z(R^4)_{3-z}]_{1+y}\ (1+y)\ [Hal^-] \qquad (IV)$$

de préférence on ajoute l'eau en mode discontinu, sous agitation, de façon particulièrement préférée par charges, en 1 à 15 charges, en particulier en 2 à 12 charges, dans la formule IV $R^1$, $R^2$, $R^3$, $R^4$, x, y, z, n et m ayant la signification définie précédemment selon la revendication 2.

7. Procédé selon l'une quelconque des revendications 2 à 6,
**caractérisé en ce**
**qu'**on ajoute par charges chaque fois en tant que quantité définie d'eau 0,5 à 4,0 moles d'eau par mole d'atomes de silicium, de préférence environ 1,0 à 2,0 moles d'eau par mole d'atomes de silicium.

8. Procédé selon l'une quelconque des revendications 2 à 7,
**caractérisé en ce**
**qu'**on effectue la réaction en présence d'un solvant, en particulier d'un alcool, de préférence en présence de l'alcool formé lors de l'hydrolyse du composé de formule II, de façon particulièrement préférée en présence d'éthanol, de méthanol, de n-propanol ou d'isopropanol.

9. Procédé selon l'une quelconque des revendications 2 à 8,
**caractérisé en ce**
**qu'**on effectue la réaction sous une pression de 1 mbar à 100 bars, de préférence sous la pression environnante

(pression normale), et à une température de 20 à 150 °C, de préférence de 40 à 120 °C, de façon particulièrement préférée de 60 à 100 °C, en particulier de 80 à 95 °C.

**10.** Procédé selon l'une quelconque des revendications 2 à 9,
**caractérisé en ce**
**qu'**on élimine le solvant volatil et éventuellement des groupes hydrolysables en solvant volatil, en particulier l'alcool résultant de l'hydrolyse, jusqu'à une teneur de la composition totale de moins de 12 % en poids à 0 % en poids, de préférence inférieure à 10 % en poids, de façon particulièrement préférée inférieure à 5 % en poids, de façon tout particulièrement préférée de 2 % en poids à 0,0001 % en poids, en particulier de 1 à ≤ 0,5 % en poids, de préférence de 0,5 à ≤ 0,1 % en poids, l'élimination du solvant volatil pouvant avoir lieu pendant la réaction et/ou après par distillation, en particulier sous pression réduite dans la plage de 0,1 à 1 000 mbars, de préférence de 80 à 300 mbars, de façon particulièrement préférée dans la plage de 80 à 180 mbars.

**11.** Procédé selon l'une quelconque des revendications 2 à 10,
**caractérisé en ce**
**qu'**on utilise comme composant A au moins un composé contenant du silicium, choisi dans la série constituée par le 3-chloropropyltriméthoxysilane, le 3-chloropropyltriéthoxysilane, le 3-chloropropylméthyldiméthoxysilane, le 3-chloropropyl-méthyldiéthoxysilane, le 3-chloropropyldiméthyléthoxysilane ou le 3-chloropropyl-diméthylméthoxysilane ou un produit d'hydrolyse ou de condensation des alcoxysilanes précités.

**12.** Procédé selon l'une quelconque des revendications 2 à 11,
**caractérisé en ce**
**qu'**on utilise les composants A et B, sur la base du groupe halogénoalkyle du composant A et de l'azote tertiaire du composant B, en un rapport molaire de 2 : 1 à 1 : 100, en particulier de 2 : 1 à 1 : 10, de façon particulièrement préférée d'environ 1 : 1 à environ 1 : 1,5.

**13.** Procédé selon l'une quelconque des revendications 2 à 12,
**caractérisé en ce qu'**on

a) - dispose au préalable le composant A conjointement avec un solvant et ajoute une quantité définie d'eau,

- ajoute le composant B,
- élimine du système au moins en partie l'alcool formé lors de l'hydrolyse,

ou
b) - dispose au préalable le composant A et ajoute un solvant,

- ajoute une quantité définie d'eau,
- ajoute le composant B,
- élimine du système au moins en partie l'alcool formé lors de l'hydrolyse, en ajoutant de l'eau en quantités définies,

ou
c) - dispose au préalable le composant A et ajoute un solvant,

- ajoute une quantité définie d'eau,
- élimine du système au moins en partie l'alcool formé lors de l'hydrolyse,
- puis ajoute le composant B et
- élimine du système au moins en partie l'alcool formé lors de l'hydrolyse,
- ajoute une quantité définie d'eau et
- élimine du système au moins en partie l'alcool formé lors de l'hydrolyse, en ajoutant de l'eau en quantités définies,

ou
d) - fait réagir le composant A avec le composant B à température élevée,

- ajoute du composant B supplémentaire en quantité définie et
- ensuite ajoute une quantité définie d'eau,

- élimine du système au moins en partie l'alcool formé lors de l'hydrolyse, en ajoutant de l'eau en quantités définies,

ou

e) - dispose au préalable le composant A et un solvant,

- ajoute une quantité définie d'eau et
- élimine du système au moins en partie l'alcool formé lors de l'hydrolyse,
- ensuite ajoute le composant B et
- ajoute, à température élevée, une quantité définie d'eau et
- élimine du système au moins en partie l'alcool formé lors de l'hydrolyse, en ajoutant éventuellement de l'eau en quantités définies

ou

f) - dispose au préalable le composant A conjointement avec un solvant et ajoute une quantité définie d'eau,

- élimine du système au moins en partie l'alcool formé lors de l'hydrolyse,
- ajoute le composant B et
- élimine du système au moins en partie l'alcool formé lors de l'hydrolyse, en ajoutant de l'eau en quantités définies.

**14.** Procédé selon l'une quelconque des revendications 2 à 13,
**caractérisé en ce**
**qu'**on ajuste par addition d'eau la composition à une viscosité inférieure à 1 500 mPa.s, de préférence à une viscosité dans la plage comprise entre 1 et 300 mPa.s, encore mieux de 1 à 100 mPa.s, de façon particulièrement préférée de 5 à 20 mPa.s.

**15.** Composition contenant des composés organosiliciés à fonction aminoalcool quaternaire, en particulier des oligomères siloxanol et des composés de formule IV, et de l'eau, pouvant être obtenue conformément à un procédé selon l'une quelconque des revendications 2 à 14.

**16.** Composition selon la revendication 15,
**caractérisée par**
une teneur en matière solide de la composition de 0,1 à 99,9 % en poids, de préférence de 0,5 à 90 % en poids, en particulier de 5 à 70 % en poids, encore mieux de 7 à 60 % en poids, de façon particulièrement préférée de 30 à 60 % en poids, la somme de tous les constituants dans la composition étant égale à 100 % en poids.

**17.** Composition selon la revendication 15 ou 16,
**caractérisée par**
une teneur en totale en azote de 0,1 à 15 % en poids, en particulier de 1,0 à 4,0 % en poids, avec une viscosité de 1 à 100 mPa.s, de façon particulièrement préférée de 5 à 20 mPa.s, et éventuellement à un pH dans l'intervalle de 5,0 à 11,0, de préférence de 6,0 à 9,0.

**18.** Composition selon l'une quelconque des revendications 15 à 17,
**caractérisée en ce que**
la composition contient au moins un autre des composants suivants choisis dans la série constitué par des pigments, charges, liants, agents de réticulation, azurants optiques, adjuvants pour peintures ou autres adjuvants.

**19.** Utilisation d'une composition ou d'un composé organosilicié à fonction aminoalcool quaternaire selon l'une quelconque des revendications 1 à 18, pour la modification, le traitement et/ou la production de formulations, substrats, articles, matériaux organiques ou inorganiques, matériaux composites, sauces de couchage de papier, applications pour impression par jet d'encre, de préférence pour la fabrication de papiers photographiques pour impression par jet d'encre ; produits de couchage du papier, papier, textiles, charges, formulations à action biocide, fongicide et/ou virucide, revêtements à action biocide, fongicide et/ou virucide, pour l'apprêtage de matériaux fibreux, fils et/ou textiles, pour l'imprégnation de textiles, pour le traitement antistatique de surfaces, en particulier de matériaux plats, fibreux, tissés, granulaires et/ou pulvérulents, pour la modification cationique de surfaces organiques polaires ou inorganiques, par exemple de charges, pigments, surfaces de verre, minérales ou céramiques, matières naturelles et matières synthétiques polaires, comme par exemple des polyesters, des polyamides, la laine, la soie, la cellulose,

la lignocellulose, le bois, des protéines, sucres, polysaccharides et similaires, qui peuvent également se trouver sous forme particulaire ou sous forme de fibres, à l'échelle centimétrique, millimétrique, micrométrique ou bien à l'échelle nanométrique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 881654
- NL 6517163
- DE 1262272
- DE 2221349
- DE 2648240
- US 5051129 A
- US 4013573 A
- US 4005028 A
- US 4035411 A
- US 4005118 A
- US 4005119 A
- WO 2008004243 A
- DE 2222997
- DE 2229580
- DE 2408192
- GB 882067 A
- WO 2008076839 A
- US 4845256 A
- WO 2005009745 A2
- US 20030175451 A
- US 20050170109 A
- DE 102007012578 A1
- US 2005170109 A1
- US 2003175451 A
- DE 102007040802 A1
- DE 102009002477
- EP 2010053626 W